(19) Europäisches Patentamt / European Patent Office / Office européen des brevets

(11) **EP 4 679 885 A1**

(12) **EUROPEAN PATENT APPLICATION**
published in accordance with Art. 153(4) EPC

(43) Date of publication:
**14.01.2026 Bulletin 2026/03**

(21) Application number: **23942792.5**

(22) Date of filing: **28.06.2023**

(51) International Patent Classification (IPC):
*H04W 36/00* (2009.01)

(52) Cooperative Patent Classification (CPC):
**H04W 36/00**

(86) International application number:
**PCT/CN2023/103252**

(87) International publication number:
**WO 2025/000271 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **LI, Haitao
  Dongguan, Guangdong 523860 (CN)**
• **HU, Yi
  Dongguan, Guangdong 523860 (CN)**

(74) Representative: **RGTH
Patentanwälte PartGmbB
Neuer Wall 10
20354 Hamburg (DE)**

(54) **WIRELESS COMMUNICATION METHOD, AMBIENT POWER (AMP) DEVICE, AND NETWORK DEVICE**

(57) A wireless communication method, an ambient (AMP) device, and a network device. The method comprises: a target AMP device performing a target operation on the basis of a target parameter, wherein the target operation comprises an operation related to cell selection and/or cell reselection, and the target parameter is related to the capability of the target AMP device.

200

A target ambient power (AMP) device performs a target operation according to a target parameter, where the target operation includes an operation related to cell selection and/or cell reselection, and the target parameter is related to the capability of the target AMP device. — S210

FIG. 6

**Description**

**TECHNICAL FIELD**

Embodiments of the present application relate to the field of communication, and in particular, to a wireless communication method, an ambient power (AMP) device and a network device.

**BACKGROUND**

In the related art, mobility management of a terminal device, such as cell selection, and cell reselection, may be achieved through cell measurement performed by the terminal device.

The introduction of zero-energy terminals into communication systems is under consideration due to their advantages of being battery-free, maintenance-free, compact in size, low in complexity and cost, and having a long life cycle. However, due to the disparity in capabilities between zero-energy terminals and legacy terminals, how to implement mobility management for zero-energy terminals has become an urgent problem that needs to be solved.

**SUMMARY**

The present application provides a wireless communication method, an ambient power (AMP) device, and a network device, which are conducive to ensuring the mobility management performance of a target AMP device.

In a first aspect, a wireless communication method is provided, which includes: performing, by a target ambient power (AMP) device according to a target parameter, a target operation, where the target operation includes an operation related to cell selection and/or cell reselection, and the target parameter is related to capability of a target AMP device.

In a second aspect, a wireless communication method is provided, which includes: adjusting, by a target ambient power (AMP) device according to a difference in capabilities between the AMP device and a reference device, a measurement result of a cell measured by the target AMP device to obtain a target measurement result, where the reference device is a non-AMP device or a reference AMP device; and performing a target operation according to the target measurement result and a reference parameter, where the target operation includes an operation related to cell selection and/or cell reselection, and the reference parameter includes a parameter for the reference device to perform the target operation.

In a third aspect, a wireless communication method is provided, which includes: transmitting, by a network device, first information to a target ambient power (AMP) device; where the first information is used for the target AMP device to determine a target parameter, and the target parameter is related to a capability of the target AMP devic; the target operation is used for the target AMP device to perform the target operation, and the target operation includes an operation related to cell selection and/or cell reselection.

In a fourth aspect, an ambient power (AMP) device is provided, which is configured to perform the method in any one of the first and second aspects in avove or various implementations thereof. Specifically, the AMP device includes functional modules configured to perform the method in any one of the first and second aspects in above or various implementations thereof.

In a fifth aspect, a network device is provided, which is configured to perform the method according to the third aspect in above or its various implementations.

Specifically, the network device includes functional modules configured to perform the method in the third aspect in above or its various implementations.

In a sixth aspect, an AMP device is provided, which includes a processor and a memory. The memory is configured to store a computer program, and the processor is configured to invoke and execute the computer program stored in the memory to perform the method in any one of the first and second aspects or various implementations thereof.

In a seventh aspect, a network device is provided, which includes a processor and a memory. The memory is configured to store a computer program, and the processor is configured to invoke and execute the computer program stored in the memory to perform the method in the third aspect or its various implementations.

In an eighth aspect, a chip is provided, which is configured to implement the method in any one of the first to third aspects or various implementations thereof. Specifically, the chip includes: a processor configured to invoke and execute a computer program from a memory, to enable a device equipped with the device to perform the method in any one of the first to third aspects or various implementations thereof.

In a ninth aspect, a computer-readable storage medium is provided, which is configured to store a computer program. The computer program causes a computer to perform the method in any one of the first to third aspects or various implementations thereof.

In a tenth aspect, a computer program product is provided, which includes computer program instructions. The computer program instructions, cause a computer to perform the method in any one of the first to third aspects or various implementations thereof.

In an eleventh aspect, a computer program is provided, and the computer program, when executed on a computer, causes the computer to perform the method in any one of the first to third aspects or various implementations thereof.

Based on the above technical solution, the target AMP device can perform an operation related to cell selection or cell reselection according to a parameter related to the capability of the target AMP device, which is conducive to ensuring the mobility management performance of the target AMP device while aslo maintaining the normal operation of its energy harvesting module and/or backscattering module, thereby guaranteeing normal communication of the AMP device.

BRIEF DESCRIPTION OF THE DRAWINGS

FIG. 1 is a schematic diagram of a communication system architecture provided in the embodiments of the present application.

FIG. 2 is a schematic diagram of a zero-energy communication system according to an example of the present application.

FIG. 3 is a diagram illustrating the principle of energy harvesting according to an embodiment of the present application.

FIG. 4 is a diagram illustrating the principle of backscatter communication according to an embodiment of the present application.

FIG. 5 is a circuit schematic of resistive load modulation according to an embodiment of the present application.

FIG. 6 is a schematic diagram of a wireless communication method provided according to an embodiment of the present application.

FIG. 7 is a schematic diagram of another wireless communication method provided according to an embodiment of the present application.

FIG. 8 is a schematic block diagram of an AMP device provided according to an embodiment of the present application.

FIG. 9 is a schematic block diagram of another AMP device provided according to an embodiment of the present application.

FIG. 10 is a schematic block diagram of a network device provided according to an embodiment of the present application.

FIG. 11 is a schematic block diagram of a communication device provided according to an embodiment of the present application.

FIG. 12 is a schematic block diagram of a chip provided according to an embodiment of the present application.

FIG. 13 is a schematic block diagram of a communication system provided according to an embodiment of the present application.

**DETAILED DESCRIPTION**

Technical solutions in the embodiments of the present application will be described below with reference to the accompanying drawings of the embodiments of the present application. Obviously, the described embodiments are merely some but not all of the embodiments of the present application. All other embodiments obtained by those ordinary skilled in the art according to the embodiments of the present application without creative efforts shall fall within the protection scope of the present application.

The technical solutions in the embodiments of the present application may be applied to various communication systems, such as, a global system of mobile communication (GSM), a code division plurality of access (CDMA) system, a wideband code division plurality of access (WCDMA) system, a general packet radio service (GPRS) system, a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi) system, and a 5th-generation (5G) communication system, a cellular Internet of Things system, a cellular passive IoT system, and other communication systems.

Generally speaking, a legacy communication system supports a limited number of connections and are relatively simple to be implemented. However, with the development of communication technology, a mobile communication system will not only support legacy communication, but also will support, for example, device to device (D2D) communication, machine to machine (M2M) communication, machine type communication (MTC), vehicle to vehicle (V2V) communication, or vehicle to everything (V2X) communication. The embodiments of the present application may further be applicable to these communication systems.

Optionally, the communication system in the embodiments of the present application may be applicable to a carrier aggregation (CA) scenario, a dual connectivity (DC) scenario, or a standalone (SA) networking scenario.

Optionally, the communication system in the embodiments of the present application may be applicable to an unlicensed spectrum, and the unlicensed spectrum may be considered as a shared spectrum. Alternatively, the communication system in the embodiments of the present application may also be applicable to a licensed spectrum, and the licensed spectrum may be considered as a non-shared spectrum.

Various embodiments are described in the present application in combination with a network device and a terminal device. The terminal device may also be called a user equipment (UE), an access terminal, a user unit, a user station, a mobile station, a mobile console, a remote station, a remote terminal, a mobile device, a user terminal, a terminal, a radio communication device, a user agent, a user apparatus, etc.

In the embodiments of the present application, the network device may be a device for communicating with a mobile device. The network device may be an access point (AP) in WLAN, a base station (BTS) in GSM or CDMA, or a base station (NodeB, NB) in WCDMA. The network device may also be an evolutional Node B (eNB or eNodeB) in LTE, a relay station or an access point, a vehicle-mounted device, a wearable device, a network device (gNB) in NR network, a network device in a cellular Internet of Things, a network device in a cellular passive Internet of Things, a network device in future evolved PLMN network, or a network device in NTN network.

By way of example and not limitation, in the embodiments of the present application, the network device may have a mobile characteristic. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, or a high elliptical orbit (HEO) satellite. Optionally, the network device may also be a base station deployed on land, water, or other places.

In the embodiments of the present application, the network device may provide services for a cell, and the terminal device may communicate with the network device via a transmission resource (such as, a frequency-domain resource, or a spectrum resource) utilized by the cell. The cell may be a cell corresponding to the network device (e.g., the base station). The cell may belong to a macro base station, or belong to a base station corresponding to a small cell. The small cell here may include a metro cell, a micro cell, a pico cell, a femto cell, etc. These small cells have characteristics of a small coverage and a low transmit power, and are suitable for providing high-rate data transmission services.

The terminal device may be a station (STA) in WLAN, or may be a cellular phone, a cordless phone, a session initiation protocol (SIP) phone, a wireless local loop (WLL) station, a personal digital assistant (PDA) device, a handheld device or computing device having a wireless communication function, or any other processing device connected to a wireless modem, a vehicle-mounted device, a wearable device, a terminal device in a next-generation communication system, e.g., NR network, a terminal device in a future evolved public land mobile network (PLMN) network, a terminal device in a cellular Internet of Things, a terminal device in a cellular passive Internet of Things, or the like.

In the embodiments of the present application, the terminal device may be deployed on land, including indoor or outdoor environments, handheld, wearable, or vehicle-mounted scenarios. Alternatively, the terminal device may also be deployed on water surface (such as a ship). Alternatively, the terminal device may also be deployed in the air (for example, on an aircraft, a balloon, and a satellite).

In the embodiments of the present application, the terminal device may be a mobile phone, a pad, a computer having a wireless communication function, a virtual reality (VR) terminal device, an augmented reality (AR) terminal device, a wireless terminal device in industrial control, a wireless terminal device in self-driving, a wireless terminal device in a remote medical, a wireless terminal device in smart grid, a wireless terminal device in transportation safety, a wireless terminal device in a smart city, a wireless terminal device in a smart home, etc.

By way of example and not limitation, in the embodiments of the present application, the terminal device may also be a wearable device. The wearable device, which may also be called a wearable smart device, is a general term for devices that are developed by applying an intelligent design on daily wears (such as, glasses, gloves, watches, clothing and shoes) by using wearable technology and that can be worn. The wearable device is a portable device that is worn directly on the body or integrated into clothing or an accessory of a consumer. The wearable device is not only a hardware device, but also implements powerful functions through software support, data interaction and cloud interaction. In a broad sense, the wearable smart devices include devices that have full functions and large sizes, and may implement complete or partial functions without relying on smart phones (such as smart watches or smart glasses), and the wearable smart device may include devices that only focus on a certain type of application functions and need to be used in combination with any other device (e.g., smartphone), such as various smart bracelets, and smart jewelry for vital sign monitoring.

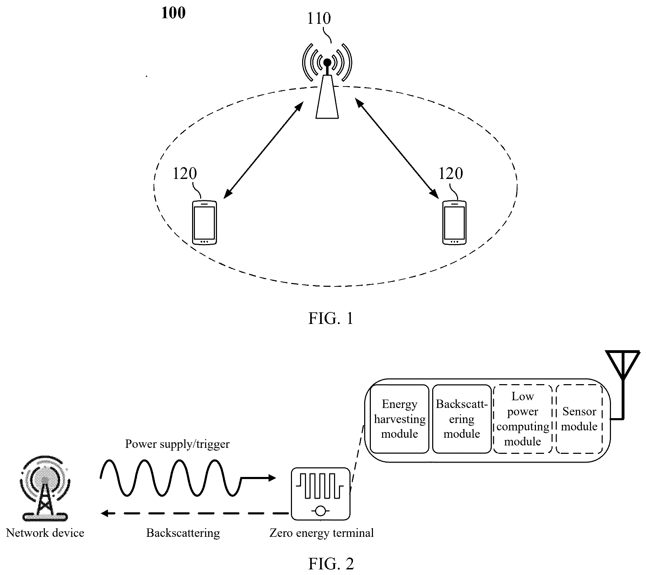

For example, a communication system 100 to which the embodiments of the present application are applicable is illustrated in FIG.1. The communication system 100 may include a network device 110, which may be a device used for communicating with terminal devices 120 (or called communication terminals or terminals). The network device 110 may provide communication coverage for a specific geographical area and may communicate with terminal devices located within the coverage area.

FIG. 1 exemplarily illustrates one network device and two terminal devices. Optionally, the communication system 100 may include a plurality of network devices, each of which may have a coverage area in which other number of terminal devices are included, which is not limited in the embodiments of the present application.

Optionally, the communication system 100 may further include other network entities such as a network controller, and a mobility management entity, which are not limited in the embodiments of the present application.

It shall be understood that, in the embodiments of the present application, a device having a communication function in the network/system may called a communication device. In an example of the communication system 100 shown in FIG. 1, communication devices may include the network device 110 and the terminal devices 120 that have the communication function, and the network device 110 and the terminal devices 120 may be specific devices described above, which will not be repeated here. The communication devices may further include other devices in the communication system 100, such as a network controller, a mobility management entity, and other network entities, which are not limited in the embodiments of the present application.

It shall be understood that the terms "system" and "network" are often used interchangeably herein. The term "and/or" herein is only an association relationship to describe associated objects, which indicates that there may be three kinds of relationships. For example, A and/or B may indicate three cases where: A exists alone, both A and B exist, and B exists alone. Moreover, a character "/" herein generally indicates that related objects before and after the character "/" are in an "or" relationship.

It shall be understood that "indicate/indicating/indicated" in the embodiments of the present application may be a direct indication, may be an indirect indication, or may further represent an association relationship. For example, that A indicates B may mean that A directly indicates B, for example, B may be obtained by A. Alternatively, that A indicates B may further mean that A indirectly indicates B, for example, A indicates C, and B may be obtained through C. Alternatively, that A indicates B may further mean that there is an association relationship between A and B.

In the description of the embodiments of the present application, the term "correspond/corresponding/correspondence" may mean that there is a direct correspondence or indirect correspondence between two elements. Alternatively, "correspond/corresponding/correspondence" may indicate an association relationship between two elements. Alternatively, "correspond/corresponding/correspondence" may indicate a relationship of indicating and being indicated, configuring and being configured, etc.

In the embodiments of the present application, "pre-defined/predetermined" may be implemented by pre-storing corresponding codes, tables or other methods that may be used for indicating related information in devices (for example, including a terminal device and a network device), and the specific implementation is not limited in the present application. For example, "pre-defined/predetermined" may refer to those defined in a protocol.

In the embodiments of the present application, "protocols" may refer to standard protocols in the communication field, which may include, for example, an LTE protocol, an NR protocol and related protocols employed in the future communication system, which are not limited in the present application.

To facilitate understanding of the technical solutions in the embodiments of the present application, the relevant technologies of the present application will be described.

1. Zero-energy communication

The key technologies for the zero-energy communication include energy harvesting, backscatter communication and low-energy technology.

As shown in FIG. 2, a typical zero-energy communication system (e.g., an RFID system) includes a network device (such as a reader in the RFID system) and zero-energy devices (e.g., electronic tags). The network device is configured to transmit wireless power supply signals and downlink communication signals to the zero-energy devices and receive backscattered signals from the zero-energy devices. A basic zero-energy device includes an energy harvesting module, a backscatter communication module, and a low-energy computing module. In addition, the zero-energy device may further have a memory or sensor for storing some basic information (such as object identification) or sensor data such as ambient temperature and ambient humidity.

For example, the energy harvesting module may harvest energy carried by radio waves in space (FIG. 2 shows the radio waves transmitted by the network device), so as to drive the low-energy computing module of the zero-energy device and realize backscatter communicaiton. Once the energy has been harvested, the zero-energy device may receive control commands from the network device and, transmit data back to the network device in a backscatter manner based on the control signaling. The transmitted data may be data already stored in the zero-energy device (such as an identifier, or pre-written information (e.g., a manufacturing date, brand, and manufacturer of the product)). The zero-energy devices may be equipped with various types of sensors, thereby reporting the data collected by the various types of sensors based on the zero-energy mechanism.

The key technologies in the zero-energy communication will be described below.

1. RF power harvesting (RF energy harvesting)

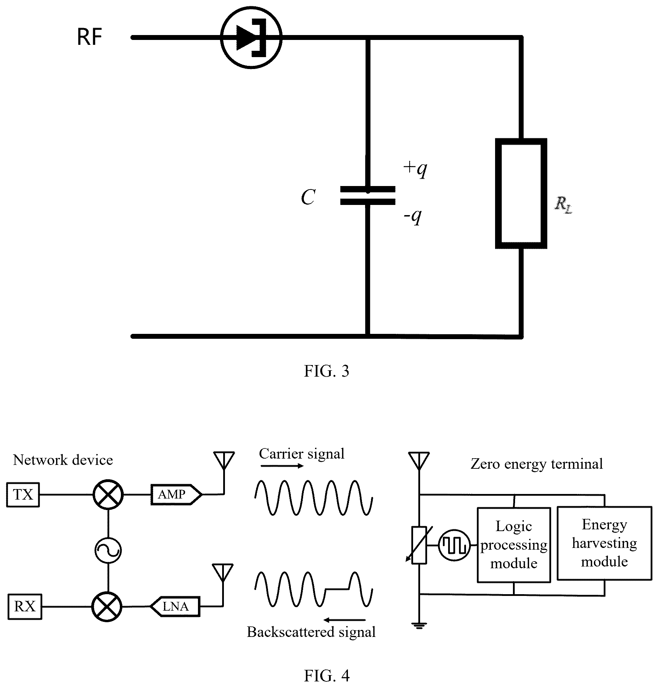

As shown in FIG. 3, the RF energy harvesting module harvests electromagnetic wave energy in space based on the principle of electromagnetic induction, so as to obtain the energy required to drive the zero-energy devices to work, e.g., driving the low-energy demodulation and modulation modules, a sensor, and memory reading. Therefore, the zero-energy devices do not require legacy batteries.

2. Back scattering (backscatter) communication

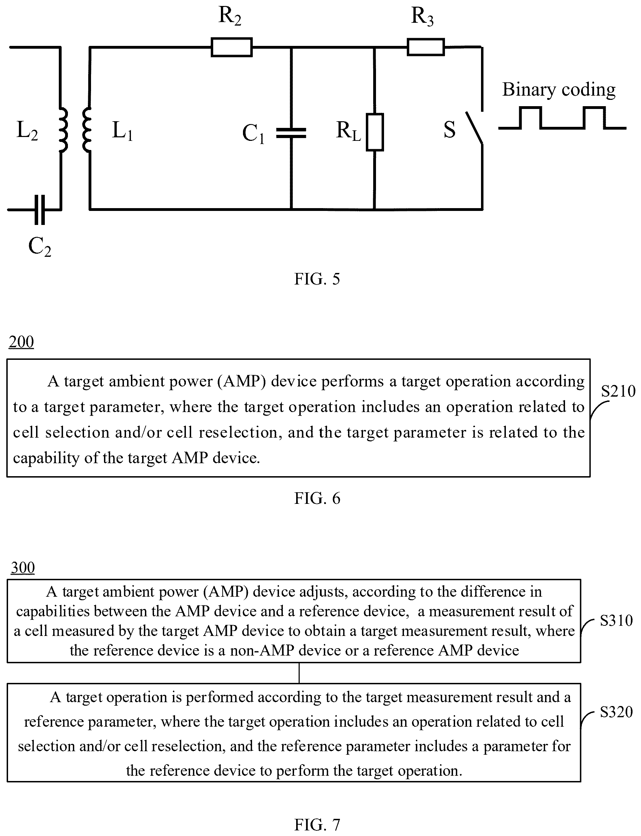

As shown in FIG. 4, the zero-energy device receives a carrier signal transmitted by the network device, modulates the carrier signal so as to carry information to be sent, and radiates a modulated signal via antenna(s). This information transmission process is called backscatter communication. Backscatter and load modulation functions are inseparable. During the load modulation, circuit parameters of an oscillation loop of the zero-energy device are adjusted and controlled according to the pace of a data stream, so that the parameters such as an impedance of the zero-energy device are changed accordingly, theybe completing the modulation process. Load modulation technology mainly includes two methods: resistive load modulation and capacitive load modulation. In resistive load modulation, a resistor is connected in parallel with a load, and the resistor is switched on or off based on the control of a binary data stream, as shown in FIG. 5. The on-off switching of the resistor will cause the voltage of the circuit to change, thus realizing amplitude shift keying (ASK) modulation. That is, signal modulation and transmission is achieved by adjusting an amplitude of a backscattered signal of the zero-energy device. Similarly, in capacitive load modulation, a resonant frequency of the circuit may be changed by switching the capacitor on or off, thereby achieving frequency shift keying (FSK) modulation, that is, the signal modulation and transmission is achieved by adjusting the operating frequency of the backscattered signal of the zero-energy device.

It may be seen that the zero-energy device modulates an incoming wave signal through load modulaiton, thereby achieving the backscatter communication process. Therefore, the zero-energy device has the following significant advantages:

(1) The zero-energy deivce does not actively transmit signals, so it does not require complex RF links, such as PA or RF filters;
(2) The zero-energy deivce does not need to actively generate high-frequency signals, so no high-frequency crystal oscillator is required;
(3) By leveraging backscatter commnication, signal transmission from the terminal does not require the terminal to consume its own energy.

3. Coding technology

The data transmitted by the zero-energy device may may be represented by binary one ("1") and binary zero ("0") through different forms of codes. In a radio frequency identification system, one of the following encoding methods are typically employed: non-return-to-zero (NRZ) inverted encoding, Manchester encoding, unipolar return-to-zero encoding, differential bi-phase (DBP) encoding, differential encoding, pulse interval encoding (PIE), bi-phase space encoding (FM0), Miller encoding, and differential encoding. In simple terms, different coding technique uses different pulse signals to represent 0 and 1.

In some scenarios, the zero-energy devices may be categorized into the following types based on their energy sources and usage patterns:

1. Passive zero-energy device

The zero-energy device (such as an electronic tag in an RFID system) does not require a built-in battery. When the zero-energy device approaches the network device (such as a reader in an RFID system), the zero-energy device enters the near-field region formed by the radiation of the network device's antenna. Consequently, electromagnetic induction generates an induced current in the zero-energy device's antenna, which drives the low-power chip circuit of the device, thereby implementing operations such as demodulating a forward link signal and modulating a reverse link (or referred to as a reflection link) signal. For a backscatter link, the zero-energy device employs backscatter implementation to transmit signals.

It can be seen that the passive zero-energy device does not require a built-in battery to drive either the forward link or the reverse link, and is a truly zero-energy device.

The passive zero-energy devices operate without batteries and feature highly simplified RF circuits and baseband circuits-for example, they require no low-noise amplifier (LNA), power amplifier (PA), crystal oscillator, analog-to-digital converter (ADC), or other similar components. Consequently, they offer significant advantages including compact size, lightweight, extremely low cost, and extended operational lifespan.

Passive zero-energy terminal may also support other energy harvesting methods. They may obtain energy for driving a circuit by harvesting ambient energy (such as light energy, thermal energy, kinetic energy, or mechanical energy), thereby enabling the terminal device to communicate.

2. Semi-passive zero-energy device

The semi-passive zero-energy device does not install legacy batteries, but may utilize an RF energy harvesting module to harvest radio wave energy or employ other energy harvesting modules to harvest ambient energy (e.g., solar, thermal, mechanical vibration energy), simultaneously storing the harvested energy in an energy storage unit (such as a capacitor). Once the energy storage unit is energized, it may drive the low-power chip circuit of the zero-energy device, thereby implementing operations such as demodulating a forward link signal and modulating a reverse link signal. For the backscatter link, the zero-energy device use backscatter implementation to transmit signal. Alternatively, based on the harvested energy, the zero-energy device may perform active transmission communication via a low-energy transmitter.

It can be seen that the semi-passive zero-energy device does not require a built-in battery to drive either the forward link or the reverse link. Although it uses energy stored in capacitors during operation, the energy originates from radio wave energy harvested by the energy harvesting module. Therefore, it is also a truly zero-energy device.

Semi-passive zero-energy devices inherit many advantages from the passive zero-energy devices, so they have many advantages including compact size, lightweight, extremely low cost, and extended operational lifespan.

3. Active zero-energy device

In some scenarios, the zero-energy devices may also be implemented as active zero-energy devices. Such devices may have built-in batteries, which are used to drive the low-power chip circuits in the zero-energy devices. Thus, operations such as demodulating a forward link signal, and modulating a backward link signal are implemented. However, for backscatter links, the zero-energy devices uses backscatter implementation to transmit signals. Thus, the zero-energy characteristic of these devices is primarily reflected in the reverse link transmission, which does not consume the terminal's own power but relies on backscattering.

The active zero-energy terminals feature built-in batteries that drive the RFID chip to extend the read/write range and enhance communication reliability. Therefore, they are suitable for applications with relatively higher requirements for communication distance and reading latency.

In some scenarios, the zero-energy devices may be categorized as follows based on the type of their transmitters:

1) Zero-energy device based on backscatter

This category of zero-energy devices employs the aforementioned backscatter method for uplink data transmission. These zero-energy devices are not equipped with active transmitters capable of active transmission, but only possess transmitters for backscatter. Therefore, when such zero-energy devices transmits data, they require the network device to supply a carrier. The zero-energy devices then perform backscatter based on this carrier to achieve data transmission.

2) Zero-energy devices based on active transmitters

This category of zero-energy devices uses active transmitters with active transmission capabilities for uplink data transmission. Therefore, during transmitting data, this category of zero-energy devices can transmit data using their own active transmitters without requiring the network device to provide carriers. Examples of active transmitters suitable for zero-energy devices include ultra-low-power ASK and ultra-low-power FSK transmitters. When transmitting a 100 $\mu$W signal, the overall power consumption may be reduced to 400 $\mu$W to 600 $\mu$W.

3) Zero-energy devices equipped with both backscatter transmitters and active transmitters

This category of zero-energy devices can support both the backscatter transmitters and the active transmitters. This category of zero-energy devices can determine which signal transmission method to use, that is, whether to use the active transmitter or the backscatter transmitter for signal transmission, based on various conditions (such as battery level or available ambient energy) or according to scheduling instructions from the network device.

In some scenarios, the zero-energy terminals may be categorized into the following three types based on their energy storage capability and ability to generate RF signals:
Device A: lacks energy storage capability, independent signal generation function, and signal amplification function. Signal transmission performed by this type of device relies exclusively on backscatter.

Device B: has energy storage capability but cannot generate signals independently. It can employ only backscatter for signal transmission, while stored energy may be used to amplify reflected signals.

Device C: has both energy storage capability and independent signal generation ability, that is, it can actively transmit signals.

The zero-energy Internet of Things (IoT) may also be called ambient power enabled IoT (Ambient IoT or AMP IoT). The zero-energy devices may also be called Ambient IoT devices or AMP IoT devices. Ambient IoT devices denote IoT equipment using various ambient energy sources, such as radio frequency energy, light, solar, thermal, and mechanical energy. Such type of devices may have no energy storage capability or a very limited energy storage capability, such as using capacitors with capabilities on the order of tens of microfarads ($\mu$F).

The ambient IoT may be applied in at least the following four categories of scenarios:

1. Object Identification: such as logistics, production line product management, and supply chain management;
2. Environmental Monitoring: such as temperature, humidity, and hazardous gas monitoring in working environment or natural environments;
3. Positioning: such as indoor positioning, smart item finding, AND production line item localization;
4. Smart Control: such as smart control of various appliances in smart homes (e.g., turning air conditioners on/off, and adjusting temperatures) and smart control of various facilities in agricultural greenhouses (e.g., automatic irrigation and fertilization).

To facilitate understanding of the technical solutions in the embodiments of the present application, the mobility management related to the present application will be explained.

In the NR system, the mobility management of terminals primarily includes cell selection and reselection procedures in the RRC idle (RRC_IDLE) state or the RRC inactive (RRC_INACTIVE) state.

During cell selection, the selected cell needs to meet the S criterion, which is the cell's signal received power and signal received quality need to simultaneously meet the following conditions:

$$S_{rxlev} > 0 \ \text{ and } \ S_{qual} > 0 \ \text{（if } Q_{qualmin} \ \text{ is configured）},$$

where,

$$S_{rxlev} = Q_{rxlevmeas} - \left( Q_{rxlevmin} + Q_{rxlevminoffset} \right) - P_{compensation} - Q_{offsettemp},$$

$$S_{qual} = Q_{qualmeas} - \left( Q_{qualmin} + Q_{qualminoffset} \right) - Q_{offsettemp},$$

where $S_{rxlev}$ and $S_{qual}$ represent cell selection signal received level value and cell selection signal received quality value, respectively;

$Q_{rxlevmeas}$ and $Q_{qualmeas}$ represent the measured signal received power (e.g., reference signal receiving power (RSRP)) and signal received quality (e.g., reference signal receiving quality (RSRQ)) of the cell, respectively;

$Q_{rxlevmin}$ and $Q_{qualmin}$ represent the minimum signal received quality and minimum signal received quality required at the network device side, respectively;

$Q_{rxlevminoffset}$ represents offset to signal received power, and is used to prevent ping-pong effects between two PLMNs caused by fluctuations in the radio environment;

$Q_{qualminoffset}$ represents offset to signal received quality, and is used to prevent ping-pong effects between two PLMNs caused by fluctuations in the radio environment;

$Q_{offsettemp}$ represents temporary offset, for example, are applicable only in specific scenarios such as the "Chiba Problem" scenario. The Chiba Problem may include cases like unobstructed lake surfaces with low path loss, resulting in exceptionally extended downlink cell coverage, while the uplink transmission power of terminals is limited, thereby causing asymmetric uplink and downlink coverage ranges.

After a terminal successfully camps on a cell, the terminal will continuously perform measurements on the cell. For example, the RRC layer of the terminal calculates $S_{rxlev}$ based on the measurement results of reference signal received power (RSRP) performed on the cell, and compares it with the intra-frequency measurement initiation threshold

($S_{intrasearch}$) and the non-intra-frequency measurement initiation threshold (i.e., $S_{nonintrasearch}$, also referred to as the inter-frequency/inter-system measurement initiation threshold) as the decision criteria for whether to initiate neighbour cell measurements.

1. For initiation of intra-frequency measurements, when the serving cell fulfils $S_{rxlev} > S_{IntraSearchP}$ and $S_{qual} > S_{IntraSearchQ}$, intra-frequency neighbour cell measurements are not initiated; otherwise, the intra-frequency neighbour cell measurements are initiated.

2. For inter-frequency measurements with equal or lower priority, when the serving cell fulfils $S_{rxlev} > S_{nonIntraSearchP}$ and $S_{qual} > S_{nonIntraSearchQ}$, inter-frequency measurements with equal or lower priority are not initiated; otherwise, inter-frequency measurements with equal or lower priority are initiated.

3. For inter-frequency measurements with higher priority, inter-frequency measurements with higher priority are always initiated.

Cell reselection refers to the procedure in which a terminal in radio resource control (RRC) idle (RRC_IDLE) mode monitors both signal quality of neighbour cells and signal quality of the current cell (or serving cell/source cell) to select the optimal cell for providinig service signals. When the signal quality and level in a neighbour cell fulfil the S criterion and a certain reselection decision criterion (i.e., the R criterion), the terminal will access and camp on that cell.

The terminal performs cell reselection based on measurement results on neighbour cells, which includes the following cases:

1. For cell reselection involving intra-frequency cells and inter-frequency cells of equal priority, compliance with the R criteria is required (e.g., ranking based on RSRP), the signal quality of the new cell shall be better than that of the source cell for a specified duration of time, and the UE shall have camped on the source cell for no less than a specified time, such as one second (i.e., 1 s).

2. For reselection to a higher-priority cell, the signal quality of the higher-priority cell shall exceed a specified threshold for a specified duration of time, and the UE has camped on the source cell for no less than a specified time, such as one second (i.e., 1 s).

3. For reselection to a lower-priority cell, it is required that there is no qualified cell of higher or equal priority, the signal quality of the source cell falls below a specified threshold, and the signal quality of the lower-priority cell exceeds a specified threshold for a specified duration of time, while the UE shall have camped on the source cell for no less than a specified time, such as one second (i.e., 1 s).

In some scenarios, two sets of measurement relaxation criteria are introduced for the mobility management of terminal devices in non-connected states, namely, the "terminal not at the cell edge (Not-cell-edge)" criterion and the "low-mobility" criterion.

For a terminal with low-mobility, when the RSRP of the serving cell exhibits minimal variation, it indicates a reduced necessity for the terminal to perform cell reselection. Therefore, neighbour cell measurements may be relaxed to achieve the purpose of terminal power saving.

For example, the configuration of $S_{SearchDeltaP}$ in system information indicates that the cell provides support for the terminal to relax neighbour cell measurements. The terminal may relax neighbour cell measurements if and only a condition is met.

For example, within the time range $T_{SearchDeltaP}$, a neighbour cell satisfies the following measurement relaxation condition:

$$(S_{rxlevRef} - S_{rxlev}) < S_{SearchDeltaP}$$

where $S_{rxlev}$ is the current $S_{rxlev}$ measurement value of the serving cell, and $S_{rxlevRef}$ is the reference $S_{rxlev}$ value of the serving cell.

In some scenarios, when UE selects or reselects to a new cell, if $S_{rxlevRef} - S_{rxlev} > 0$ or if the relaxation condition is not met within the time range $T_{SearchDeltaP}$, UE sets $S_{rxlevRef}$ to the current $S_{rxlev}$ measurement value of the serving cell.

In some scenarios, when the not-cell-edge criterion is satisfied, the terminal may relax neighbour cell measurements.

For example, the not-cell-edge criterion may be:

$S_{rxlev} > S_{SearchThresholdP}$ and $S_{qual} > S_{SearchThresholdQ}$ (if $S_{SearchThresholdQ}$ is configured by network). In some scenarios, the terminal may perform cell measurements according to the measurement configuration. For example, the network device may configure, for both intra-frequency and inter-frequency measurements, a per-frequency SS/PBCH block measurement timing configuration (SMTC) to assist the UE to perform measurements, so as to achieve power saving at the UE.

In some embodiments, the terminal device may determine the signal quality of a cell based on parameter N and a threshold. For example, the signal quality of the cell may be a linear average of the signal quality values from the best N beams that meet the threshold.

In some cases, the parameter N and the threshold may be obtained through system broadcast.

In other cases, if the system does not broadcast the parameter N and the threshold, the signal quality of the best beam in the cell may be determined as the signal quality of the cell.

In some scenarios, the terminal may select a candidate cell through rangeToBestCell, that is, among all candidate cells whose signal quality difference from the best cell signal quality falls within the range rangeToBestCell, the cell with the highest number of beams meeting the threshold is selected as the candidate cell. In some scenarios, in order to achieve load balancing across different frequencies, the network side may set distinct priorities for different frequencies. The UE preferentially camps on a higher-priority frequency. The priorities of frequencies may be obtained from the system broadcast or from dedicated signaling (such as RRC Release message), or inherited from other RATs.

In some scenarios, the network device uses both cell reselection priority and sub-priority to jointly indicate the final cell reselection frequency priority. The cell reselection priority ranges from 0 to 7, and the sub-priority can be one of the set {0.2, 0.4, 0.6, 0.8}, which can jointly indicate a total of 40 distinct frequency priorities. Sub-priority is only applied to NR frequencies and LTE frequencies.

In some scenarios, the application of priority follows the following rules:

if a dedicated configuration is existed, the broadcast configuration is not applied;
when camping on any cell state, the broadcast configuration is applied;
if no priority is configured, the lowest priority is applied by default;
the frequencies across RATs shall not be configured with the same frequency priority.

In the RRC_IDLE state, all relevant parameters used to constrain UE measurement behavior are derived from system broadcast messages. It is assumed that all relevant parameters have been configured. If they are not configured, the relevant constraints do not exist.

As can be seen from the above description, the zero-energy terminal have many characteristics such as being free of legacy batteries, maintenance-free, compact in size, low in complexity and cost, and having an extended life cycle. Their capabilities are quite different from those of legacy terminals. For example, the zero-energy terminal need to harvest energy to power themselves to work. Different terminals may have different energy harvesting efficiencies, and the coverage supported by the harvested energy may also differ. For example, some terminals can drive the energy harvesting module to operation only when the signal received power exceeds a certain threshold, which results in differences in energy harvesting efficiencies between zero-energy terminals when selecting cells. In addition, for Type A zero-energy terminal, the backscatter link also needs to be activated through a received signal. The zero-energy terminals with different capabilities may require different received signal strengths to activate the backscatter link. Therefore, how to manage the mobility of the zero-energy terminal is an urgent problem that needs to be solved.

For ease of understanding of technical solutions in the embodiments of the present application, the technical solutions of the present application will be described in detail hereafter in combination with specific embodiments. The related technologies above, as optional solutions, may be arbitrarily combined with technical solutions in the embodiments of the present application, and these combined solutions shall belong to the protection scope of the embodiments of the present application. The embodiments of the present application include at least part of the following contents.

FIG. 6 is a schematic diagram of a wireless communication method 200 according to embodiments of the present application. As shown in FIG. 6, the method 200 includes at least part of the following contents:

In S210, a target ambient power (AMP) device performs a target operation according to a target parameter, where the target operation includes an operation related to cell selection and/or cell reselection, and the target parameter is related to a capability of the target AMP device.

In the embodiments of the present application, the AMP device is also called the ambient power enabled IoT (Ambient IoT or AMP IoT) device, the zero-energy device, the zero-energy terminal, etc. The AMP device may refer to the IoT device that uses various forms of ambient energy, such as radio frequency energy, light energy, solar energy, thermal energy, and mechanical energy.

In the embodiments of the present application, the network device may be a base station in a cellular communication system, such as a gNB in the NR system, an AP in the WIFI system, or a relay node.

In the embodiments of the present application, the legacy terminal may be an existing terminal in the communication system, such as a UE in the NR or LTE system, a narrow band Internet of Things (NB-IoT) terminal, an enhanced mobile broadband (eMBB) terminal, or a reduced capability terminal (RedCap), which is not limited in this disclosure.

In some embodiments, the capability of the target AMP device include one or more of the following:

an energy harvesting-related capability of the target AMP device; or

a backscatter-related capability of the target AMP device.

In some embodiments, the energy harvesting-related capability of the target AMP device may include:

minimum required signal energy for the target AMP device to activate the energy harvesting module or to perform energy harvesting, which includes, for example, the minimum signal received power and/or minimum signal received quality; or
minimum required signal energy for the target AMP device to harvest energy used for communication, which includes, for example, the minimum signal received power and/or the minimum signal received quality.

In some embodiments, the backscatter-related capability of the target AMP device may include:
minimum required signal energy for the target AMP device to activate the backscattering module or to perform backscatter, for example, the minimum signal received power or the minimum signal received quality.

In the embodiments of the present application, the signal received power may be, for example, RSRP, and the signal received quality may be, for example, RSRQ.

In some embodiments, the AMP devices may be categorized into a plurality of types according to their capabilities, or in other words, the capabilities of AMP devices may be categorized into a plurality of capability levels.

In some embodiments, the capability of the AMP device include, but are not limited to, one or more of the following:

the transmitter type of the AMP device, whether the AMP device supports backscatter, whether the AMP device supports active transmission, whether the AMP device supports reverse amplification, the reverse amplification capability of the AMP device, whether the AMP device has energy storage capability, the energy storage capability level of the AMP device, or the type of energy used by the AMP device for energy harvesting.

In some embodiments, the transmitter type of the AMP device may include a backscatter transmitter and/or a active transmitter.

In some embodiments, whether the AMP device supports the reverse amplification may refer to whether the AMP device can amplify the backscattered signal while performing backscatter.

In some embodiments, the type of energy used by the AMP device for energy harvesting may include, but is not limited to, one or more of the following: radio frequency energy, light energy, solar energy, thermal energy, or mechanical energy.

Method 1: categorizing AMP devices according to the transmitter type or signal transmission method.

As an example, AMP devices may be categorized into:
AMP devices supporting backscatter (or in other words, backscatter-based AMP devices) and AMP devices supporting active transmission (or in other words, active transmission-based AMP devices).

As another example, AMP devices may be categorized into:
AMP devices supporting backscatter (or in other words, backscatter-based AMP devices), AMP devices supporting active transmission (or in other words, active transmission-based AMP devices), AMP devices supporting both backscatter and active transmission (or in other words, active transmission and backscatter-based AMP devices).

In some embodiments, an AMP device supporting backscatter is equipped with a backscatter transmitter, an AMP device supporting active transmission is equipped with an active transmitter, and an AMP device supporting both backscatter and active transmission is equipped with a backscatter transmitter and an active transmitter. The backscatter transmitter supports backscatter communication mode and the active transmitter supports active transmission communication mode.

Optionally, the backscatter capability of the AMP device may be further subdivided into:
an AMP device supporting backscatter with a reverse amplification capability, and an AMP device supporting backscatter without reverse amplification capability.

As another example, an AMP device may include two or more of the following types:
an AMP device supporting backscatter with reverse amplification capability, an AMP device supporting backscatter without reverse amplification capability, or an AMP device supporting active transmission.

As another example, an AMP device may include two or more of the following types:
an AMP device supporting backscatter with reverse amplification capability, an AMP device supporting backscatter without reverse amplification capability, an AMP device supporting active transmission, an AMP device supporting both backscatter and active transmission with reverse amplification capability, or an AMP device supporting both backscatter and active transmission without reverse amplification capability.

Method 2: categorizing AMP devices according to their energy storage capability.

As an example, AMP devices may be categorized into:
AMP devices without energy storage capability and AMP devices with energy storage capability.

Optionally, AMP devices with energy storage capability may be classified into multiple levels, for example, based on the energy storage capacity of energy storage units (e.g., capacitors) of AMP devices.

For example, there are AMP devices with a first energy storage capability and AMP devices with a second energy storage capability, and the first energy storage capability and the second energy storage capability are different, for example, the first energy storage capability and the second energy storage capability correspond to different capacitance values or correspond to different capacitance ranges, e.g., the first energy storage capability corresponds to a small capacitance, and the second energy storage capability corresponds to a large capacitance.

As another example, there are AMP devices with a first energy storage capability, AMP devices with a second energy storage capability, and AMP devices with a third energy storage capability, where the first energy storage capability, the second energy storage capability, and the third energy storage capability are different. For example, the first energy storage capability, the second energy storage capability, and the third energy storage capability correspond to different capacitance values or correspond to different capacitance ranges. For example, the first energy storage capability corresponds to a small capacitance, the second energy storage capability corresponds to a medium capacitance, and the third energy storage capability corresponds to a large capacitance.

Method 3: categorizing AMP devices according to their energy sources.

As an example, AMP devices may be categorized into:

AMP devices based on RF energy and AMP devices based on non-RF energy (i.e., using other ambient energy other than RF energy, such as one or more of light energy, heat energy or vibration energy).

As another example, AMP devices may be categorized into:

AMP devices based on RF energy, AMP devices based on light energy, AMP devices based on mechanical energy, and AMP devices based on other ambient energy.

It should be understood that the above-mentioned categorizing method or capability classifying method of AMP devices is only an example, and the present application is not limited thereto. Other methods may also be used to categorize AMP devices. For example, AMP devices are categorized into three categories based on their energy storage capability and whether they support the active transmission: Device A, Device B, and Device C. The specific capabilities corresponding to Device A, Device B, and Device C can be referred to the relevant descriptions in the aforementioned embodiments, which will not repeated for the sake of brevity.

In some embodiments, the target operation includes mobility management-related operations. Such mobility management may include, but is not limited to, mobility management in the RRC_IDLE or RRC_INACTIVE state, such as operations related to cell selection or cell reselection; alternatively, such mobility management may also include mobility management in the RRC_CONNECTED state, such as operations related to cell handover.

In some specific embodiments, the target operation includes but is not limited to one or more of the following operations:

cell selection, cell reselection, initiating neighbour cell measurements, relaxing neighbour cell measurements, or determining whether the target AMP device is not located at cell edge.

That is, the target parameter may include one or more of the following: parameters for the target AMP device to perform cell selection, parameters for the target AMP device to perform cell reselection, parameters for the target AMP device to initiate neighbour cell measurements, parameters for the target AMP device to relax neighbour cell measurements, or parameters for the target AMP device to determine whether it is located at cell edge.

In some embodiments of the present application, the target parameter is predefined.

For example, a unified set of parameters may be predefined for all AMP devices to perform the target operation. Alternatively, AMP devices may be classified into various capabilities or types, and each capability or type corresponds to a set of parameters. In such case, the target parameter may be a set of parameters corresponding to the capability of the target AMP device.

In some other embodiments of the present application, the target parameter may be configured by the network device. For example, the target parameter is configured through a system message or RRC signaling.

For example, the network device may configure a unified set of parameters for all AMP devices to perform the target operation. Alternatively, AMP devices may be classified into various capabilities or types, and each capability or type is configured with a set of parameters. In such case, the target parameter may be a set of parameters corresponding to the capability of the target AMP device.

In some embodiments of the present application, the target parameter is determined by the target AMP device.

For example, the target AMP device may determine the target parameter according to a reference parameter, and the reference parameter is a parameter for a reference device to perform the target operation.

In some embodiments, the reference parameter may include one or more of the following: parameters for the reference device to perform cell selection, parameters for the reference device to perform cell reselection, parameter for the reference device to initiate neighbour cell measurements, parameters for the reference device to relax neighbour cell measurements, or parameters for the reference device to determine whether it is located at the cell edge.

In some embodiments, the reference parameter may be considered as parameters corresponding to reference device capability or reference device type, the reference device capability is the capability corresponding to the reference device, and the reference device type is the device type corresponding to the reference device.

In some embodiments, the reference device is a non-AMP device (or a legacy terminal), or it may also be a reference AMP device. The reference AMP device may be, for example, an AMP device with a specific capability. The capability of the reference AMP device may be called a reference capability. In some embodiments, the reference capability may be characterized by the energy harvesting-related capability and/or the backscatter-related capability of the reference AMP device. For example, the reference capability is characterized by the minimum required signal received power and/or signal received quality for the reference AMP device to activate the energy harvesting module or to perform energy harvesting, and/or, the minimum required signal received power and/or signal received quality for the reference AMP device to activate the backscattering module or to perform backscatter.

In some embodiments, the reference parameter corresponding to the reference capability may be predefined, or configured by the network (e.g., configured through system messages). The reference capability corresponds to a specific minimum RSRP and/or minimum RSRQ required to activate the energy harvesting module or to perform energy harvesting operation, and/or the specific minimum RSRP and/or RSRQ required to activate the backscattering module or to perform backscattering operation.

In some embodiments, the reference parameter is predefined, or the reference parameter is configured by the network device. For example, the reference parameter is configured via system messages or RRC signaling.

In some embodiments, determining the target parameter according to the reference parameter includes: determining the target parameter according to the reference parameter and a target offset, where the target offset is determined according to a difference in capabilities between the target AMP device and the reference device. For example, the target parameter is equal to the sum of the reference parameter and the target offset.

In some embodiments, the target offset is determined by the target AMP device according to the difference in capabilities between the target AMP device and the reference device. That is, the network device does not need to configure the target offset, and the target AMP device determines the target offset according to the difference in capabilities between the target AMP device and the reference device.

In some embodiments, the target offset is selected by the target AMP device from M offsets, where the M offsets correspond to M types of AMP device capabilities, and the M offsets are the offsets between parameters for performing the target operation corresponding to the M types of AMP device capabilities and a parameter for performing the target operation (i.e., the reference parameter) corresponding to the capability of the reference AMP device. The target offset is an offset corresponding to the capability of the target AMP device, and M is a positive integer.

That is, in this case, the target AMP device can determine the target offset from the M offsets according to its own capability, and further determine the target parameter according to the reference parameter.

In some embodiments, the M offsets are predefined, or the M offsets are configured by the network device, for example, configured via system messages or RRC signaling.

In some embodiments, the target parameter is a set of parameters among a plurality of sets of parameters, the plurality of sets of parameters correspond to different AMP device capabilities, and each set of parameters includes a parameter for an AMP device with a corresponding capability to perform the target operation. The target parameter is a set of parameters corresponding to the capability of the target AMP device.

That is, in this case, the target AMP device may determine a set of parameters from a plurality of sets of parameters according to its own capability, and the set of parameters is the target parameter.

In some embodiments, different capabilities of the AMP device correspond to different information including one or more of the following:

the minimum required signal received power for activating the energy harvesting module or performing energy harvesting;
the minimum required signal received quality for activating the energy harvesting module or performing energy harvesting;
the minimum required signal received power for activating the backscattering module or performing backscatter; or
the minimum required signal received quality for activating the backscattering module or performing backscatter.

In some embodiments, the plurality of sets of parameters are predefined, or the plurality of sets of parameters are configured by the network device. For example, the plurality of sets of parameters are configured via system messages or RRC signaling.

In some embodiments of the present application, the method 200 further includes:
transmitting, by the network device, first information to the target AMP device, where the first information is used to determine the target parameter.

In some embodiments, the first information is used to indicate a plurality of sets of parameters, and the target parameter is a set of parameters among the sets of parameters. The plurality of sets of parameters correspond to different AMP device capabilities, and each set of parameters includes a parameter for an AMP device with a corresponding capability to perform the target operation.

In some other embodiments, the first information is used to indicate a reference parameter and M offsets, and the reference parameter is a parameter for a reference device to perform the target operation. The reference device may be a legacy terminal or a reference AMP device.

For example, the M offsets correspond to M types of AMP device capabilities, the M offsets correspond to M types of AMP device capabilities, and the M offsets are offsets between parameters for performing the target operation corresponding to the M types of AMP device capabilities and a parameter for performing the target operation corresponding to a capability of the reference AMP device. In such case, the target AMP device may select the target offset from the M offsets according to its own capability.

In some embodiments, the first information is used to indicate a reference parameter, the target parameter is determined according to the reference parameter, and the reference parameter includes a parameter for the reference device to perform the target operation. The reference device is either the non-AMP device or the reference AMP device. In such case, the target AMP device may determine the target offset based on the difference between its own capability and the capability of the reference device.

In some embodiments, the first information may be carried in downlink signaling, such as system messages, or RRC signaling.

With reference to specific scenarios, the mobility management method of AMP devices provided in the embodiments of the present application will be described in the following.

Embodiment 1: the target operation includes cell selection.

In Embodiment 1, the target parameter includes parameters used for cell selection.

In some embodiments, the target parameter includes a target signal received power related parameter and/or a target signal received quality related parameter.

The target signal received power related parameter is used to determine a cell selection signal reception level value that corresponds to a signal received power of a cell measured by the target AMP device, i.e., $S_{rxlev}$.

The target signal received quality related parameter is used to determine a cell selection signal received quality value that corresponds to a signal received quality of a cell measured by the target AMP device, i.e., $S_{qual}$.

In some embodiments, in a case where the minimum signal received quality $Q_{qualmin}$ required by the network device is configured, the target parameter includes a target signal received power related parameter and a target signal received quality related parameter. In a case where the minimum signal received quality $Q_{qualmin}$ required by the network device is not configured, the target parameter includes the target signal received power related parameter.

In some embodiments, the target signal received power related parameter includes a target signal received power compensation parameter, which is used to compensate for the signal received power of a cell measured by the target AMP device.

In some embodiments, the target signal received quality related parameter includes a target signal received quality compensation parameter, which is used to compensate for the signal received quality of the cell measured by the target AMP device.

In the following, with reference to an example where RSRP is taken as the signal received powe and RSRQ is taken as the signal received quality, the determination methods for the target RSRP compensation parameter and the target RSRQ compensation parameter will be explained.

Method 1:

In some embodiments, the target RSRP compensation parameter is determined according to a reference RSRP compensation parameter, and the reference RSRP compensation parameter is an RSRP compensation parameter corresponding to the legacy terminal.

For example, the target RSRP compensation parameter is determined according to the reference RSRP compensation parameter and the difference in capabilities between the target AMP device and the legacy terminal.

In some embodiments, the reference RSRP compensation parameter may include the minimum RSRP required by the network device side for the legacy terminal, i.e., $Q_{rxlevmin}$. The target RSRP compensation parameter can be equal to the minimum RSRP required by the network device side for the target AMP device.

In some embodiments, the target RSRP compensation parameter is determined according to the reference RSRP compensation parameter and a target RSRP offset. The target RSRP offset is determined according to the difference in capabilities between the target AMP device and the reference AMP device. For example, the target RSRP compensation parameter is equal to the sum of the reference RSRP compensation parameter and the target RSRP offset.

In some embodiments, the target RSRP offset may be determined according to an RSRP offset related to the energy harvesting capability of the target AMP device and/or an RSRP offset related to the backscatter capability of the target AMP device.

For example, the target RSRP offset may be equal to the sum of the RSRP offset related to the energy harvesting capability of the target AMP device and the RSRP offset related to the backscatter capability of the target AMP device; alternatively, the target RSRP offset may be equal to the RSRP offset related to the energy harvesting capability of the target AMP device; alternatively, the target RSRP offset may be equal to the RSRP offset related to the backscatter capability of the target AMP device; alternatively, the target RSRP offset may be equal to the larger one or smaller one of the two RSRP offsets.

As an example, if the target AMP device supports energy harvesting and active transmission but does not support backscatter, the target RSRP offset may be the RSRP offset related to the energy harvesting capability of the target AMP device.

As another example, if the target AMP device supports both energy harvesting and backscatter, the target RSRP offset may be equal to the sum of the two RSRP offsets, or equal to one of the RSRP offsets, or equal to the larger or smaller one of the two.

Optionally, the RSRP offset related to the energy harvesting capability of the target AMP device may be the difference between the minimum required RSRP for the target AMP device to activate the energy harvesting module or to perform energy harvesting operation and the minimum RSRP required by the network device side for the legacy terminal.

For example, the minimum RSRP required by the network device side for the legacy terminal is x0 dBm, and the minimum required RSRP for the target AMP device to activate the energy harvesting module or to perform energy harvesting operation is x1 dBm. Thus, the RSRP offset related to the energy harvesting capability of the target AMP device is (x1-x0) dB.

Optionally, the RSRP offset related to the backscatter capability of the target AMP device may be the difference between the minimum RSRP required for the target AMP device to activate the backscattering module or to perform backscattering operation and the minimum RSRP required by the network device side.

As another example, if the minimum RSRP required by the network device for the legacy terminal is y0 dBm, and the minimum required RSRP for the target AMP device to activate the backscattering module or to perform backscattering operation is y1 dBm, then the RSRP offset related to the backscatter capability of the target AMP device is (y1-y0) dB.

In some embodiments, the target RSRQ compensation parameter is determined according to a reference RSRQ compensation parameter, and the reference RSRQ compensation parameter is an RSRQ compensation parameter corresponding to the legacy terminal.

For example, the target RSRQ compensation parameter is determined according to the reference RSRQ compensation parameter and the difference in capabilities between the target AMP device and the legacy device.

In some embodiments, the reference RSRQ compensation parameter may include the minimum RSRQ required by the network device side for the legacy terminal, i.e., $Q_{qualmin}$. The target RSRQ compensation parameter can be equal to the minimum RSRQ required by the network device side for the target AMP device.

In some embodiments, the target RSRQ compensation parameter is determined according to the reference RSRQ compensation parameter and a target RSRQ offset. The target RSRQ offset is determined according to the difference in capabilities between the target AMP device and the reference AMP device. For example, the target RSRQ compensation parameter is equal to the sum of the reference RSRQ compensation parameter and the target RSRQ offset.

In some embodiments, the target RSRQ offset may be determined according to an RSRQ offset related to the energy harvesting capability of the target AMP device and/or an RSRQ offset related to the backscatter capability of the target AMP device.

For example, the target RSRQ offset may be equal to the sum of the RSRQ offset related to the energy harvesting capability of the target AMP device and the RSRQ offset related to the backscatter capability of the target AMP device; alternatively, the target RSRQ offset may be equal to the RSRQ offset related to the energy harvesting capability of the target AMP device; alternatively, the target RSRQ offset may be equal to the RSRQ offset related to the backscatter capability of the target AMP device; alternatively, the target RSRQ offset may be equal to the larger or smaller one of the two RSRQ offsets.

As an example, if the target AMP device supports energy harvesting and active transmission but does not support backscatter, the target RSRQ offset may be the RSRQ offset related to the energy harvesting capability of the target AMP device.

As another example, if the target AMP device supports both energy harvesting and backscatter, the target RSRQ offset may be equal to the sum of the two RSRQ offsets, or equal to one of the RSRQ offsets, or equal to the larger or smaller one of the two.

Optionally, the RSRQ offset related to the energy harvesting capability of the target AMP device may be the difference between the minimum required RSRQ for the target AMP device to activate the energy harvesting module or to perform energy harvesting operation and the minimum RSRQ required by the network device side for the legacy terminal.

For example, the minimum RSRQ required by the network device side for the legacy terminal is z0 dB, and the minimum RSRQ required for the target AMP device to activate the energy harvesting module or to perform energy harvesting operation is z1 dB. Thus, the RSRQ offset related to the energy harvesting capability of the target AMP device is (z1-z0) dB.

Optionally, the RSRQ offset related to the backscatter capability of the target AMP device may be the difference between the minimum RSRQ required for the target AMP device to activate the backscattering module or to perform backscattering operation and the minimum RSRQ required by the network device side.

As another example, if the minimum RSRQ required by the network device for the legacy terminal is w0 dB, and the minimum required RSRQ for the target AMP device to activate the backscattering module or to perform backscattering operation is w1 dB, then the RSRQ offset related to the backscatter capability of the target AMP device is (wl-w0) dB.

In some embodiments, the target cell selected by the target AMP device satisfies the following S criteria:

$$S_{rxlev} > 0 \quad \text{and} \quad S_{qual} > 0,$$

where,

$$S_{rxlev} = Q_{rxlevmeas} - \left( Q_{rxlevmin} + Q_{rxlevminoffset} \right) - P_{compensation} - Q_{offsettemp} - P_{offsetAMP},$$

$$S_{qual} = Q_{qualmeas} - \left( Q_{qualmin} + Q_{qualminoffset} \right) - Q_{offsettemp} - Q_{offsetAMP},$$

where $Q_{rxlevmeas}$ and $Q_{qualmeas}$ represent the measured RSRP and RSRQ of the cell, respectively;

$Q_{rxlevmin}$ and $Q_{qualmin}$ represent the minimum RSRP and minimum RSRQ required by the network device side for the legacy terminal, respectively;

$Q_{rxlevminoffset}$ represents RSRP offset, which is used to prevent the ping-pong effects between two PLMNs caused by fluctuations in the radio environment;

$Q_{qualminoffset}$ represents RSRQ offset, which is used to prevent the ping-pong effects between two PLMNs caused by fluctuations in the radio environment;

$P_{compensation}$ represents power compensation parameter. For example, in a case where the maximum transmit power allowed by the network device side is greater than the maximum uplink transmit power determined according to the UE's own capability, a power compensation is performed due to the low UE power;

$Q_{offsettemp}$ represents temporary offset, for example, are applicable only in special scenarios, such as the "Chiba problem" scenario;

$P_{offsetAMP}$ represents target RSRP offset, that is, the sum of $Q_{rxlevmin}$ and $P_{offsetAMP}$, i.e., $Q_{rxlevmin} + P_{offsetAMP}$, is the target RSRP compensation parameter; and

$Q_{offsetAMP}$ represents target RSRQ offset, that is, the sum of $Q_{qualmin}$ and $Q_{offsetAMP}$, i.e., $Q_{quatmin} + Q_{offsetAMP}$, is the target RSRQ compensation parameter.

In some embodiments, if the target AMP device supports energy harvesting and active transmission but does not support backscatter, the target RSRP offset may be the RSRP offset related to the energy harvesting capability of the target AMP device. For the above example, the target RSRP offset may be (x1-x0) dB.

In some embodiments, if the target AMP device supports both energy harvesting and backscatter, the target RSRP offset may be equal to the sum of the two RSRP offsets, or equal to one of the RSRP offsets, or equal to the larger or smaller one of the two. For the above example, the target RSRP offset may be equal to (x1-x0)+(y1-y0) dB, or equal to (x1-x0) dB, or equal to (y1-y0) dB, or equal to the larger or smaller one of (y1-y0) dB and (x1-x0) dB.

In some embodiments, if the target AMP device supports energy harvesting and active transmission but does not support backscatter, the target RSRQ offset may be the RSRQ offset related to the energy harvesting capability of the target AMP device. For the above example, the target RSRP offset may be (z1-z0) dB.

In some embodiments, if the target AMP device supports both energy harvesting and backscatter, the target RSRP offset may be equal to the sum of the two RSRP offsets, or equal to one of the RSRP offsets, or equal to the larger or smaller one of the two. For the above example, the target RSRP offset may be equal to (z1-z0)+(w1-w0) dB, or equal to (z1-z0) dB, or equal to (w1-w0) dB, or equal to the larger or smaller value of (z1-z0) dB and (w1-w0) dB.

In some other embodiments, the target cell selected by the target AMP device satisfies the following S criteria:

$$S_{rxlev} > 0,$$

where,

$$S_{rxlev} = Q_{rxlevmeas} - \left( Q_{rxlevmin} + Q_{rxlevminoffset} \right) - P_{compensation} - Q_{offsettemp} - P_{compensationAMP}.$$

For the meaning of each parameter in the above formula, reference may be made to the relevant description in the previous embodiment, which will not be repeated here for the sake of brevity.

In some embodiments, one or more of the following parameters may be optional:

$$Q_{rxlevminoffset}, \ Q_{offsettemp}, \ Q_{qualminoffset}, \ \text{or} \ P_{compensation}.$$

Method 2:

In some embodiments, the target RSRP compensation parameter is determined according to a reference RSRP compensation parameter, and the reference RSRP compensation parameter is an RSRP compensation parameter corresponding to a reference AMP device.

For example, the target RSRP compensation parameter is determined according to the reference RSRP compensation parameter and the difference in capabilities between the target AMP device and the reference AMP device.

In Method 2, the reference RSRP compensation parameter may include the minimum RSRP required by the network device side for the reference AMP device.

In some embodiments, the target RSRP compensation parameter is determined according to the reference RSRP compensation parameter and a target RSRP offset. The target RSRP offset is determined according to the difference in capabilities between the target AMP device and the reference AMP device. For example, the target RSRP compensation parameter is equal to the sum of the reference RSRP compensation parameter and the target RSRP offset.

In some embodiments, the target RSRP offset may be determined according to an RSRP offset related to the energy harvesting capability of the target AMP device and/or an RSRP offset related to the backscatter capability of the target AMP device. For the specific determination method, reference may be made to the detailed description in Method 1, which will not be repeated here for the sake of brevity.

Optionally, the RSRP offset related to the energy harvesting capability of the target AMP device may be the difference between the minimum required RSRP for the target AMP device to activate the energy harvesting module or to perform energy harvesting operation and the minimum required RSRP for the reference AMP device to activate the energy harvesting module or to perform energy harvesting operation.

For example, if the minimum required RSRP for the reference AMP device to activate the energy harvesting module or to perform energy harvesting operation is x2 dBm, and the minimum required RSRP for the target AMP device to activate the energy harvesting module or to perform energy harvesting operation is x1 dBm, then the RSRP offset related to the energy harvesting capability of the target AMP device is (x1-x2) dB.

Optionally, the RSRP offset related to the backscatter capability of the target AMP device may be the difference between the minimum required RSRP for the target AMP device to activate the backscattering module or to perform backscattering operation and the minimum required RSRP for the reference AMP device to activate the backscattering module or to perform backscattering operation.

In another example, the minimum required RSRP for the reference AMP device to activate the backscattering module or to perform backscattering operation is y2 dBm, and the minimum required RSRP for the target AMP device to activate the backscattering module or to perform backscattering operation is y1 dBm. Thus, the RSRP offset related to the backscatter capability of the target AMP device is (y1-y2) dB.

In some embodiments, the target RSRQ compensation parameter is determined according to a reference RSRQ compensation parameter, and the reference RSRQ compensation parameter is an RSRQ compensation parameter corresponding to the reference AMP device.

For example, the target RSRQ compensation parameter is determined according to the reference RSRQ compensation parameter and the difference in capabilities between the target AMP device and the reference AMP device.

In Method 2, the reference RSRQ compensation parameter may include the minimum RSRQ required by the network device side for the reference AMP device.

In some embodiments, the target RSRQ compensation parameter is determined according to the reference RSRQ compensation parameter and a target RSRQ offset. The target RSRQ offset is determined according to the difference in capabilities between the target AMP device and the reference AMP device. For example, the target RSRQ compensation parameter is equal to the sum of the reference RSRQ compensation parameter and the target RSRQ offset.

In some embodiments, the target RSRQ offset may include an RSRQ offset related to the energy harvesting capability of the target AMP device and/or an RSRQ offset related to the backscatter capability of the target AMP device.

Optionally, the RSRQ offset related to the energy harvesting capability of the target AMP device may be the difference between the minimum required RSRQ for the target AMP device to activate the energy harvesting module or to perform energy harvesting operation and the minimum required RSRQ for the reference AMP device to activate the energy harvesting module or to perform energy harvesting operation.

For example, the minimum required RSRQ for the reference AMP device to activate the energy harvesting module or to perform energy harvesting operation is z2 dB, and the minimum required RSRQ for the target AMP device to activate the energy harvesting module or to perform energy harvesting operation is z1 dB. Thus, the RSRQ offset related to the energy harvesting capability of the target AMP device is (z1-z2) dB.

Optionally, the RSRQ offset related to the backscatter capability of the target AMP device may be the difference between the required minimum RSRQ for the target AMP device to activate the backscattering module or to perform backscattering operation and the minimum required RSRQ for the reference AMP device to activate the backscattering module or to perform backscattering operation.

In another example, the minimum required RSRQ for the reference AMP device to activate the backscattering module or to perform backscattering operation is w2 dB, and the minimum required RSRQ for the target AMP device to activate the backscattering module or to perform backscattering operation is w1 dB. Thus, the RSRQ offset related to the backscatter capability of the target AMP device is (w1-w2) dB.

In some embodiments, the target cell selected by the target AMP device satisfies the following S criteria:

$$S_{rxlev}>0 \quad \text{and} \quad S_{qual}>0,$$

where,

$$S_{rxlev}=Q_{rxlevmeas} - \left(Q_{rxlevmin\text{-}AMPREF} + Q_{rxlevminoffset}\right) - P_{compensation} - Q_{offsettemp}\text{-}P_{offsetAMP},$$

$$S_{qual} = Q_{qualmeas} - \left(Q_{qualmin-AMPREF} + Q_{qualminoffset}\right) - Q_{offsettemp}\text{-}Q_{offsetAMP},$$

where $Q_{rxlevmeas}$ and $Q_{qualmeas}$ represent the measured RSRP and RSRQ of the cell, respectively;

$Q_{rxlevmin-AMPREF}$ and $Q_{qualmin-AMPREF}$ represent the minimum RSRP and minimum RSRQ required by the network device side for the reference AMP device, respectively;

$Q_{rxlevminoffset}$ represents RSRP offset, which is used to prevent the ping-pong effects between two PLMNs caused by fluctuations in the radio environment;

$Q_{qualminoffset}$ represents RSRQ offset, which is used to prevent the ping-pong effect between two PLMNs caused by fluctuations in the radio environment;

$Q_{offsettemp}$ irepresents temporary offset, for example, are applicable only in special scenarios, such as the "Chiba problem" scenario;

$P_{offsetAMP}$ represents target RSRP offset, that is, the sum of $Q_{rxlevmin-AMPREF}$ and $P_{offSefAMP}$, i.e., $Q_{rxlevmin-AMPREF} +P_{offsetAMP}$, is the target RSRP compensation parameter; and

$Q_{offsetAMP}$ represents target RSRQ offset, that is, the sum of $Q_{qualmin-AMPREF}$ and $Q_{offsetAMP}$, i.e., $Q_{qualmin-AMPREF} +Q_{offsetAMP}$, is the target RSRQ compensation parameter.

In some other embodiments, the target cell selected by the target AMP device satisfies the following S criteria:

$$S_{rxlev}>0,$$

where,

$$S_{rxlev}=Q_{rxlevmeas} - \left(Q_{rxlevmin-AMPREF} + Q_{rxlevminoffset}\right) - P_{compensation} - Q_{offsettemp}\text{-}P_{offsetAMP}.$$

For the meaning of each parameter in the above formula, reference may be made to the relevant description in the previous embodiment, which will not be repeated here for the sake of brevity.

Method 3:

In some embodiments, the target RSRP compensation parameter is one of a plurality of RSRP compensation parameters. The plurality of RSRP compensation parameters are associated with different AMP device capabilities, and the target RSRP compensation parameter is associated with the capability of the target AMP device.

In some embodiments, the plurality of RSRP compensation parameters may be considered as the minimum RSRPs required by the network device for AMP devices with multiple types of AMP device capabilities.

In some embodiments, the plurality of RSRP compensation parameters are predefined, or the plurality of RSRP compensation parameters are configured by the network device, for example,via system messages or RRC signaling.

In some embodiments, the plurality of RSRP compensation parameters are determined according to differences between the multiple types of AMP device capabilities and the capability of the reference device, and the reference device may be the legacy terminal or the reference AMP device.

In this way, the target AMP device may determine the target RSRP compensation parameter from the plurality of RSRP compensation parameters according to its own capabilities, and further determine $S_{rxlev}$ corresponding to the measured RSRP of the cell according to the target RSRP compensation parameter.

In some embodiments, the target RSRQ compensation parameter is one of a plurality of RSRQ compensation parameters. The plurality of RSRQ compensation parameters are associated with different AMP device capabilities, and the target RSRQ compensation parameter is associated with the capability of the target AMP device.

In some embodiments, the plurality of RSRQ compensation parameters may be considered as the minimum RSRQs required by the network device for AMP devices with multiple types of AMP device capabilities.

In some embodiments, the plurality of RSRQ compensation parameters are predefined, or the plurality of RSRQ compensation parameters are configured by the network device, for example, via system messages or RRC signaling.

In some embodiments, the plurality of RSRQ compensation parameters are determined according to the differences between the multiple types of AMP device capabilities and the capability of the reference device, and the reference device may be the legacy terminal or the reference AMP device.

In this way, the target AMP device may determine the target RSRQ compensation parameter from the plurality of RSRQ compensation parameters according to its own capability, and further determine $S_{qual}$ corresponding to the measured RSRQ of the cell according to the target RSRQ compensation parameter.

Therefore, since the cell coverages supported by AMP devices with different capabilities differ, in Embodiment 1, when determining the measured $S_{rxlev}$ or $S_{qual}$ of the cell, considering the RSRP compensation parameter or RSRQ compensation parameter related to the capability of the AMP device helps ensure that the AMP device selects a suitable cell, guarantees the normal operation of the energy harvesting module and/or backscattering module of the AMP device, thereby ensuring normal communication of the AMP device. For example, an AMP device with a larger minimum required RSRP to activate the energy harvesting and/or backscattering module supports smaller cell coverage. Therefore, such AMP devices should try to avoid selecting cells with smaller $S_{rxlev}$ values during cell selection; otherwise, the energy harvesting module and/or backscattering module of the AMP device would be unable to operate normally, ultimately resulting in communication failure.

Embodiment 2: the target operation includes initiating neighbour cell measurements.

In Embodiment 2, the target parameter includes parameters used for determining whether to initiate neighbour cell measurements.

For example, the target parameter includes a first target measurement result threshold, and the first target measurement result threshold is used for the target AMP device to determine whether to initiate neighbour cell measurements.

In some embodiments, the first target measurement result threshold includes a first target signal received power threshold (e.g., RSRP threshold) and/or a first target signal received quality threshold (e.g., RSRQ threshold).

In some specific embodiments, the first target signal received power threshold includes:
a signal received power threshold for intra-frequency measurements (denoted as first $S_{IntraSearchP}$), and/or a signal received power threshold for non-intra-frequency measurements (denoted as first $S_{nonIntraSearchP}$).

In some specific embodiments, the first target signal quality threshold includes:
a signal received quality threshold for intra-frequency measurements (denoted as first $S_{IntraSearchQ}$), and/or a signal received quality threshold for non-intra-frequency measurements (denoted as first $S_{nonIntraSearchQ}$).

Therefore, the first target measurement result threshold may include one or more of the first $S_{IntraSearchP}$, the first $S_{IntraSearchQ}$, the first $S_{nonIntraSearchP}$, or the first $S_{nonIntraSearchQ}$. For the specific rules for initiating neighbour cell measurements, reference may be made to the relevant descriptions in the above embodiments, which will not be repeated here for brevity.

The determination of parameters used for determining whether to initiate neighbour cell measurements will be described below by taking the first $S_{IntraSearchP}$ as an example. The first $S_{IntraSearchP}$ may be replaced by any parameter among the first $S_{IntraSearchQ}$, the first $S_{nonIntraSearchP}$, and the first $S_{nonIntraSearchQ}$.

In some embodiments of the present application, the first $S_{IntraSearchP}$ is predefined.

For example, all AMP devices may be predefined to adopt a unified $S_{IntraSearchP}$, or the AMP devices may be categorized into various capabilities or types, with each capability or type corresponding to one $S_{IntraSearchP}$. The first $S_{IntraSearchP}$ may be the $S_{IntraSearchP}$ corresponding to the capability of the target AMP device.

In some other embodiments of the present application, the first $S_{IntraSearchP}$ may be configured by the network device, for example, configured via system messages or RRC signaling.

For example, the network device may configure all AMP devices to adopt a unified $S_{IntraSearchP}$, or AMP devices may be categorized into various capabilities or types, with each capability or type configured with a corresponding

$S_{IntraSearchP}$. The first $S_{IntraSearchP}$ may be the $S_{IntraSearchP}$ corresponding to the capability of the target AMP device.

In still other embodiments of the present application, the first $S_{IntraSearchP}$ is determined by the target AMP device.

For example, the target AMP device may determine the first $S_{IntraSearchP}$ according to a reference $S_{IntraSearchP}$. The reference $S_{IntraSearchP}$ may be $S_{IntraSearchP}$ for the reference device, and the reference device may be the legacy terminal or the reference AMP device.

The way to determine the first $S_{IntraSearchP}$ will be described below through Method 1 and Method 2.

Method 1: the first $S_{IntraSearchP}$ is determined according to the reference $S_{IntraSearchP}$.

In some embodiments, the reference $S_{IntraSearchP}$ is the $S_{IntraSearchP}$ corresponding to the legacy terminal or the reference AMP device.

In some embodiments, the reference $S_{IntraSearchP}$ is predefined, or is configured by the network device, for example, configured via system messages or RRC signaling.

In some embodiments, the target AMP device may determine the first $S_{IntraSearchP}$ according to the reference $S_{IntraSearchP}$ and a first RSRP offset. The first RSRP offset is determined according to the difference in capabilities between the target AMP device and the reference device.

For example, the reference device is the legacy terminal, and the reference $S_{IntraSearchP}$ is $S_{IntraSearchP}$ targeting the legacy terminal. If the minimum RSRP required by the network device side for the legacy terminal is x0 dBm, and the minimum required RSRP for the target AMP device to activate the energy harvesting module or to perform energy harvesting operation is x1 dBm, then the first RSRP offset may be (x1-x0) dB, and the first $S_{IntraSearchP}$ can be calculated through the following formula: first $S_{IntraSearchP}$=reference $S_{IntraSearchP}$+(x1-x0) dB.

In another example, the reference device is the legacy terminal, and the reference $S_{IntraSearchP}$ is $S_{IntraSearchP}$ targeting the legacy terminal. If the minimum RSRP required by the network device side for the legacy terminal is y0 dBm, and the required minimum RSRP by the target AMP device to activate the backscattering module or to perform backscattering operation is y1 dBm, then the first RSRP offset may be (y1-y0) dB, and the first $S_{IntraSearchP}$ can be calculated through the following formula: first $S_{IntraSearchP}$=reference $S_{IntraSearchP}$+(y1-y0) dB.

For example, the reference device is the reference AMP device, and the reference $S_{IntraSearchP}$ is $S_{IntraSearchP}$ targeting the reference AMP device. If the required minimum RSRP for the reference AMP device to activate the backscattering module or to perform backscattering operation is x2 dBm, and the minimum required RSRP for the target AMP device to activate the energy harvesting module or to perform energy harvesting operation is x1 dBm, then the first RSRP offset may be (x1-x2) dB, and the first $S_{IntraSearchP}$ can be calculated through the following formula: first $S_{IntraSearchP}$=reference $S_{IntraSearchP}$+(x1-x2) dB.

In another example, the reference device is the reference AMP device, and the reference $S_{IntraSearchP}$ is $S_{IntraSearchP}$ targeting the reference AMP device. If the minimum required RSRP for the reference AMP device to activate the backscattering module or to perform backscattering operation is y2 dBm, and the minimum required RSRP for the target AMP device to activate the backscattering module or to perform backscattering operation is y1 dBm, then the first RSRP offset may be (y1-y2) dB, and the first $S_{IntraSearchP}$ can be calculated through the following formula: first $S_{IntraSearchP}$=reference $S_{IntraSearchP}$+(y1- y2) dB.

Method 1-1: the first RSRP offset is determined by the target AMP device according to the difference in capabilities between the target AMP device and the reference device. For the specific determination method, reference may be made to the relevant description in the above embodiments.

Method 1-2: the first RSRP offset is selected by the target AMP device from M RSRP offsets.

The M RSRP offsets correspond to M types of AMP device capabilities, and the M RSRP offsets are RSRP offsets between $S_{IntraSearchP}$ corresponding to the M types of AMP device capabilities and $S_{IntraSearchP}$ corresponding to the capability of the reference AMP device. The first RSRP offset is the RSRP offset corresponding to the capability of the target AMP device, and M is a positive integer.

In some embodiments, the M offsets are predefined, or the M offsets are configured by the network device, for example, configured via system messages or RRC signaling.

Method 2: the first $S_{IntraSearchP}$ is selected from multiple $S_{IntraSearchP}$.

In some embodiments, the multiple $S_{IntraSearchP}$ correspond to different AMP device capabilities, and the first $S_{IntraSearchP}$ is $S_{IntraSearchP}$ corresponding to the capability of the target AMP device.

In some embodiments, the multiple $S_{IntraSearchP}$ are predefined, or are configured by the network device, for example, configured via system messages or RRC signaling.

In some embodiments, the network device may configure the multiple $S_{IntraSearchP}$ according to multiple types of AMP device capabilities.

Therefore, since the cell coverages supported by AMP devices with different capabilities differ, and the areas for these devices to initiate neighbour cell measurements also vary, in Embodiment 2, the target AMP device may select an appropriate measurement threshold according to the capability of the AMP device to determine whether to initiate neighbour cell measurements, which helps ensure that the AMP device initiates neighbour cell measurements within an appropriate area. For example, for an AMP device with a larger minimum required RSRP for the energy harvesting and/or backscattering module, it supports a smaller cell coverage. Such AMP devices should trigger neighbour cell measurements when $S_{rxlev}$ is relatively high to avoid the issue where the AMP device's energy harvesting and/or backscattering module fails to operate due to the $S_{rxlev}$ of the currently camped cell becoming too low caused by excessively fast movement, which would thereby affect the normal communication of the AMP device.

Embodiment 3: the target operation includes relaxing neighbour cell measurements.

In Embodiment 3, the target parameter includes parameters for relaxing neighbour cell measurements.

For example, the target parameter includes a target measurement result variation threshold, and the target measurement result variation threshold is used for the target AMP device to determine whether to relax neighbour cell measurements.

In some specific embodiments, the target measurement result variation threshold includes a target signal received power variation threshold, such as a target RSRP variation threshold, denoted as target $S_{SearchDeltaP}$.

In some embodiments, within an evaluation period (e.g., $T_{SearchDeltaP}$), when the variation of the current $S_{rxlev}$ of the serving cell relative to the reference $S_{rxlev}$ of the serving cell does not exceed the target $S_{SearchDeltaP}$, the target AMP device may perform relaxed measurements on neighbour cells.

In some embodiments, the target parameter may futher include an evaluation period, such as $T_{SearchDeltaP}$.

In some embodiments of the present application, the target $S_{SearchDeltaP}$ is predefined.

For example, every AMP device may be predefined to adopt a unified $S_{SearchDeltaP}$, or AMP device may be divided into a plurality of capabilities or types, each capability or type corresponds to an $S_{SearchDeltaP}$, and the target $S_{SearchDeltaP}$ may be the $S_{SearchDeltaP}$ corresponding to the capability of the target AMP device.

In some other embodiments of the present application, the target $S_{SearchDeltaP}$ may be configured by a network device.

For example, the network device may configure all AMP devices to adopt a unified $S_{SearchDeltaP}$, or AMP devices may be categorized into various capabilities or types, with each capability or type configured with a corresponding $S_{SearchDeltaP}$. The target $S_{SearchDeltaP}$ may be the $S_{SearchDeltaP}$ corresponding to the capability of the target AMP device.

In still other embodiments of the present application, the target $S_{SearchDeltaP}$ is determined by the target AMP device.

For example, the target AMP device may determine the target $S_{SearchDeltaP}$ according to a reference $S_{SearchDeltaP}$. The reference $S_{SearchDeltaP}$ may be $S_{SearchDeltaP}$ for the reference device, and the reference device may be the legacy terminal or the reference AMP device.

The way to determine the target $S_{SearchDeltaP}$ will be described below through Method 1 and Method 2.

Method 1: the target $S_{SearchDeltaP}$ is determined according to the reference $S_{SearchDeltaP}$.

In some embodiments, the reference $S_{SearchDeltaP}$ is the $S_{SearchDeltaP}$ corresponding to the legacy terminal or the reference AMP device.

In some embodiments, the reference $S_{SearchDeltaP}$ is predefined, or is configured by the network device, for example, configured via system messages or RRC signaling.

In some embodiments, the target AMP device may determine the target $S_{SearchDeltaP}$ according to the reference $S_{SearchDeltaP}$ and a second RSRP offset,. The second RSRP offset is determined according to the difference in capabilities between the target AMP device and the reference device.

For example, the reference device is the legacy terminal, and the reference $S_{SearchDeltaP}$ is $S_{SearchDeltaP}$ targeting the legacy terminal. If the minimum RSRP required by the network device side for the legacy terminal is x0 dBm, and the minimum required RSRP for the target AMP device to activate the energy harvesting module or to perform the energy harvesting operation is x1 dBm, then the second RSRP offset may be (xl-x0) dB, and the target $S_{SearchDeltaP}$ can be calculated through the following formula: target $S_{SearchDeltaP}$ = reference $S_{SearchDeltaP}$ + (x1-x0) dB.

In another example, the reference device is the legacy terminal, and the reference $S_{SearchDeltaP}$ is $S_{SearchDeltaP}$ targeting the legacy terminal. If the minimum RSRP required by the network device side for the legacy terminal is y0 dBm, and the minimum required RSRP for the target AMP device to activate the backscattering module or to perform backscattering operation is y1 dBm, then the second RSRP offset may be (y1-y0) dB, and the target $S_{SearchDeltaP}$ can be calculated through the following formula: target $S_{SearchDeltaP}$ = reference $S_{SearchDeltaP}$ + (y1-y0) dB.

For example, the reference device is the reference AMP device, and the reference $S_{SearchDeltaP}$ is $S_{SearchDeltaP}$ targeting the reference AMP device. If the minimum required RSRP for the reference AMP device to activate the backscattering module or to perform backscattering operation is x2 dBm, and the minimum required RSRP for the target AMP device to activate the energy harvesting module or perform energy harvesting operation is x1 dBm, then the second RSRP offset may be (x1-x2) dB, and the target $S_{SearchDeltaP}$ can be calculated through the following formula: target $S_{SearchDeltaP}$ = reference $S_{SearchDeltaP}$ + (x1-x2) dB.

In another example, the reference device is the reference AMP device, the reference $S_{SearchDeltaP}$ is $S_{SearchDeltaP}$ targeting the reference AMP device. If the minimum required RSRP for the reference AMP device to activate the backscattering module or to perform backscattering operation is y2 dBm, and the minimum required RSRP for the target AMP device to activate the backscattering module or to perform backscattering operation is y1 dBm, then the second RSRP offset may be (y1-y2) dB, and the target $S_{SearchDeltaP}$ can be calculated through the following formula: target $S_{SearchDeltaP}$ = reference $S_{SearchDeltaP}$ + (y1 - y2) dB.

Method 1-1: the second RSRP offset is determined by the target AMP device according to the difference in capabilities between the target AMP device and the reference device.

Method 1-2: the second RSRP offset is selected by the target AMP device from M RSRP offsets.

The M RSRP offsets correspond to M types of AMP device capabilities, and the M RSRP offsets are RSRP offsets between $S_{SearchDeltaP}$ corresponding to the M types of AMP device capabilities and $S_{SearchDeltaP}$ corresponding to the capability of the reference AMP device. The second RSRP offset is RSRP offset corresponding to the capability of the target AMP device, and M is a positive integer.

In some embodiments, the M offsets are predefined, or the M offsets are configured by the network device, for example, configured via system messages or RRC signaling.

Method 2: the target $S_{SearchDeltaP}$ is selected from multiple $S_{SearchDeltaP}$.

In some embodiments, the multiple $S_{SearchDeltaP}$ correspond to different AMP device capabilities, and the target $S_{SearchDeltaP}$ is $S_{IntraSearchP}$ corresponding to the capability of the target AMP device.

In some embodiments, the multiple $S_{SearchDeltaP}$ are predefined, or are configured by the network device, for example, configured via system messages or RRC signaling.

In some embodiments, the network device may configure the multiple $S_{SearchDeltaP}$ according to multiple types of AMP device capabilities.

Embodiment 4: the target operation includes determining whether the target AMP device is not located at cell edge.

In Embodiment 4, the target parameter includes parameters for determining whether the target AMP device is not located at cell edge.

For example, the target parameter includes a second target measurement result threshold, and the second target measurement result threshold is used to determine whether the target AMP device is not located at cell edge.

In some embodiments, the second target measurement result threshold includes a second target signal received power variation threshold (denoted as second $S_{SearchThresholdP}$) and/or a second target signal received quality threshold (denoted as second $S_{SearchThresholdQ}$).

That is, the second target measurement result threshold may include one or more of second $S_{SearchThresholdP}$ or second $S_{SearchThresholdQ}$.

For example, the second target measurement result threshold may include second $S_{SearchThresholdP}$, or may include both second $S_{SearchThresholdP}$ and second $S_{SearchThresholdQ}$.

In some embodiments, if $S_{rxlev}$ of the cell is greater than second $S_{SearchThresholdP}$ and $S_{qual}$ of the cell is greater than second $S_{SearchThresholdQ}$, the target AMP device determines that it is not located at cell edge. Thus, the target AMP device may relax the neighbour cell measurements.

In some other embodiments, if $S_{rxlev}$ of the cell is greater than second $S_{SearchThresholdP}$, the target AMP device determines that it is not located at cell edge. Thus, the target AMP device may relax the neighbour cell measurements.

The determination of parameters for determining whether the target AMP device is not located at cell edge will be described below by taking the second $S_{SearchThresholdP}$ as an example. The determination of the second $S_{SearchThresholdQ}$ is similar, which will not be repeated here for the sake of brevity.

In some embodiments of the present application, the second $S_{SearchThresholdP}$ is predefined.

For example, all AMP devices may be predefined to adopt a unified $S_{SearchThresholdP}$, or AMP devices may be categorized into various capabilities or types, with each capability or type corresponding to one $S_{SearchThresholdP}$. The second $S_{SearchThresholdP}$ may be the $S_{SearchThresholdP}$ corresponding to the capability of the target AMP device.

In some other embodiments of the present application, the second $S_{SearchThresholdP}$ may be configured by the network device.

For example, the network device may configure all AMP devices to adopt a unified $S_{SearchThresholdP}$, or AMP devices may be categorized into various capabilities or types, with each capability or type configured with a corresponding $S_{SearchThresholdP}$. The second $S_{SearchThresholdP}$ may be the $S_{SearchThresholdP}$ corresponding to the capability of the target AMP device.

In still other embodiments of the present application, the second $S_{SearchThresholdP}$ is determined by the target AMP device.

For example, the target AMP device may determine the second $S_{SearchThresholdP}$ according to a reference $S_{SearchThresholdP}$. The reference $S_{SearchThresholdP}$ may be the $S_{SearchThresholdP}$ for the reference device, and the reference device may be the legacy terminal or the reference AMP device.

The way to determine the second $S_{SearchThresholdP}$ will be described below through Method 1 and Method 2.

Method 1: the first $S_{SearchThresholdP}$ is determined according to the reference $S_{SearchThresholdP}$.

In some embodiments, the reference $S_{SearchThresholdP}$ is the $S_{SearchThresholdP}$ corresponding to the legacy terminal or the reference AMP device.

In some embodiments, the reference $S_{SearchThresholdP}$ is predefined, or is configured by the network device, for example, configured via system messages or RRC signaling.

In some embodiments, the target AMP device may determine the second $S_{SearchThresholdP}$ according to the reference $S_{SearchThresholdP}$ and a third RSRP offset, and the third RSRP offset is determined according to the difference in capabilities between the target AMP device and the reference device.

For example, the reference device is the legacy terminal, and the reference $S_{SearchThresholdP}$ is the $S_{SearchThresholdP}$ corresponding to the legacy terminal. If the minimum RSRP required by the network device side for the legacy terminal is x0 dBm, and the minimum required RSRP for the target AMP device to activate the energy harvesting module or to perform energy harvesting operation is x1 dBm, then the third RSRP offset may be (x1-x0) dB, and the second $S_{SearchThresholdP}$ can be calculated through the following formula: second $S_{SearchThresholdP}$ = reference $S_{SearchThresholdP}$ + (x1-x0) dB.

In another example, the reference device is the legacy terminal, and the reference $S_{SearchThresholdP}$ is the $S_{SearchThresholdP}$ corresponding to the legacy terminal. If the minimum RSRP required by the network device side for the legacy terminal is y0 dBm, and the minimum required RSRP for the target AMP device to activate the backscattering module or to perform backscattering operation is y1 dBm, then the third RSRP offset may be (y1-y0) dB, and the second $S_{SearchThresholdP}$ can be calculated through the following formula: second $S_{IntraSearchP}$ = reference $S_{IntraSearchP}$ + (y1-y0) dB.

For example, the reference device is the reference AMP device, and the reference $S_{SearchThresholdP}$ is the $S_{SearchThresholdP}$ corresponding to the reference AMP device. If the minimum required RSRP for the reference AMP device to activate the backscattering module or to perform backscattering operation is x2 dBm, and the minimum required RSRP for the target AMP device to activate the energy harvesting module or to perform the energy harvesting operation is x1 dBm, then the third RSRP offset may be (x1-x2) dB, and the second $S_{SearchThresholdP}$ can be calculated through the following formula: second $S_{IntraSearchP}$=reference $S_{IntraSearchP}$+(x1-x2) dB.

In another example, the reference device is a reference AMP device, and the reference $S_{SearchThresholdP}$ is the $S_{SearchThresholdP}$ corresponding to the reference AMP device. If the minimum required RSRP for the reference AMP device to activate the backscattering module or to perform backscattering operation is y2 dBm, and the minimum required RSRP for the target AMP device to activate the backscattering module or to perform backscattering operation is y1 dBm, then the third RSRP offset may be (y1-y2) dB, and the second $S_{SearchThresholdP}$ can be calculated through the following formula: second $S_{SearchThresholdP}$=reference $S_{SearchThresholdP}$+(y1-y2) dB.

Method 1-1: the third RSRP offset is determined by the target AMP device according to the difference in capabilities between the target AMP device and the reference device.

Method 1-2: the third RSRP offset is selected by the target AMP device from M RSRP offsets.

In some embodiments, the M RSRP offsets correspond to M types of AMP device capabilities, the M RSRP offsets are RSRP offsets between $S_{SearchThresholdP}$ corresponding to the M types of AMP device capabilities and $S_{SearchThresholdP}$ corresponding to the capability of the reference AMP device. The third RSRP offset is the RSRP offset corresponding to the capability of the target AMP device, and M is a positive integer.

In some embodiments, the M offsets are predefined, or the M offsets are configured by the network device, for example, configured via system messages or RRC signaling.

Method 2: the second $S_{SearchThresholdP}$ is selected from multiple $S_{SearchThresholdP}$.

In some embodiments, the multiple $S_{SearchThresholdP}$ correspond to different AMP device capabilities, and the second $S_{SearchThresholdP}$ is the $S_{SearchThresholdP}$ corresponding to the capability of the target AMP device.

In some embodiments, the multiple $S_{SearchThresholdP}$ are predefined, or are configured by the network device, for example, configured via system messages or RRC signaling.

In some embodiments, the network device may configure the multiple $S_{SearchThresholdP}$ according to the multiple types of AMP device capabilities.

Therefore, since the cell coverages supported by AMP devices with different capabilities differ, in Embodiment 4, the target AMP device may select an appropriate measurement result threshold according to the capability of the AMP device to determine whether or not it is located at cell edge. This determination guides the determination of whether to relax neighbour cell measurements, or in other words, whether to exit the relaxed neighbour cell measurements to perform the normal neighbour cell measurements, which helps ensure that the AMP device can more quickly detect suitable neighbour cells for cell reselection. For example, for an AMP device with relatively poor cell coverage, a higher RSRP threshold is used. This means that when the RSRP measurement value of the cell is relatively high, the device can exit the relaxed neighbour cell measurements and perform the normal neighbour cell measurements, enabling faster detection of neighbor cells for cell reselection.

It should be understood that the target AMP device may only perform a single operation in the above-mentioned Embodiments 1 to 4, or may perform a plurality of operations in the above-mentioned Embodiments 1 to 4, which is not limited in the present application.

For example, in cell selection, the target AMP device may select a suitable cell according to Embodiment 1.

Before cell reselection, the target AMP device may determine whether to initiate the neighbour cell measurements according to Embodiment 2, or determine whether to relax the neighbour cell measurements according to Embodiment 3. Alternatively, the target AMP device may determine whether it is not located at cell edge according to Embodiment 4, thereby determining whether to relax neighbour cell measurements, which is conducive to ensuring the mobility management performance of the target AMP device.

In summary, in the embodiments of the present application, the target AMP device may select an appropriate parameter according to its own capability to perform operation related to cell selection or cell reselection, which is conducive to ensuring the mobility management performance of the target AMP device.

For example, in cell selection, the target AMP device may determine the target RSRP compensation parameter or RSRQ compensation parameter according to the difference between its own capability and that of the reference device, and further, according to the target RSRP or RSRQ compensation parameter, the target AMP device determinies $S_{rxlev}$ or $S_{qual}$ for cell selection. In this way, utilizing $S_{rxlev}$ or $S_{qual}$ to perform cell selection facilitates the AMP device in selecting an appropriate cell, and helps ensure the normal operation of the energy harvesting and/or backscattering module of the AMP device, which thereby ensures the normal communication of the AMP device.

In another example, when determining whether to initiate neighbour cell measurements, the target AMP device may determine the target measurement result threshold according to the difference between its own capability and that of the reference device, and further, according to the target measurement result threshold, the target AMP device determines whether to initiate neighbour cell measurements, which is conducive to ensuring that the AMP device initiates neighbour cell measurements within an appropriate area, guaranteeing the normal operation of the energy harvesting and/or backscattering module of the AMP device, thereby ensuring the normal communication of the AMP device.

In another example, when determining whether it is not located at cell edge, the target AMP device may determine the target measurement result threshold according to the difference between its own capability and that of the reference device. Furthermore, according to the target measurement result threshold, the target AMP device may determine whether it is not located at cell edge, which facilitates the AMP device in exiting the relaxed neighbor cell measurements and resuming normal neighbor cell measurements within an appropriate area, enables the AMP device to more quickly detect suitable neighbor cells for cell reselection, helps ensurs the normal operation of the energy harvesting module and/or backscattering module of the AMP device, thereby guaranteeing the normal communication of the AMP device.

FIG. 7 is a schematic diagram of a wireless communication method 300 according to another embodiment of the present application. The method 300 may be performed by the network device in the communication system shown in FIG. 1. As shown in FIG. 37, the method 300 includes the following contents:

In S310, a target ambient power (AMP) device adjusts, according to the difference in capabilities between the AMP device and a reference device, a measurement result of the cell measured by the target AMP device to obtain a target measurement result, where the reference device is a non-AMP device or a reference AMP device.

In S320, a target operation is performed according to the target measurement result and a reference parameter. The target operation includes an operation related to cell selection and/or cell reselection, and the reference parameter includes a parameter for the reference device to perform the target operation.

In method 300, for implementations related to the target AMP device, the network device, the legacy terminal, the reference AMP device, the capability of the target AMP device, the target operation, and the reference parameter, reference may be made to relevant description in method 200, which will not repeated here for the sake of brevity.

In some embodiments, the reference parameter may be predefined, or may be configured by the network device, for example, configured via system messages or RRC signaling.

In some embodiments, the reference device may perform the target operation based on the reference parameter. For example, the reference device first measures the cell to obtain the measurement result, and then performs the target operation based on the measurement result and the reference parameter.

Correspondingly, the target AMP device may also perform the target operation based on the reference parameter. The distinction lies in that the target AMP device first adjusts the measurement result according to the difference between its own capability and the capability of the reference device, and then performs the target operation based on the adjusted measurement results and the reference parameter.

In some embodiments of the present application, the S310 includes:

determing, by the target AMP device, a target offset according to the difference in capabilities between the target AMP device and the reference device; and
adjusting, according to the target offset, the measurement result of the cell to obtain the target measurement result.

For example, the target measurement result is obtained by subtracting the target offset from the measurement result of the cell.

The way to determine the target offset will be illustrated through specific scenarios below.

Embodiment 1: the target operation includes cell selection.

In Embodiment 1, the reference parameter includes parameters for the cell selection.

In some embodiments, the target offset may include a target RSRP offset and/or a target RSRQ offset.

For example, the target RSRP offset may be determined according to one or more of the following:

RSRP offset related to the energy harvesting capability of the target AMP device; or
RSRP offset related to the backscatter capability of the target AMP device.

For the specific determination method, reference may be made to the relevant description in method 200, which will not be repeated here for the sake of brevity.

For example, the target RSRQ offset may be determined according to one or more of the following:

RSRQ offset related to the energy harvesting capability of the target AMP device; or
RSRQ offset related to the backscatter capability of the target AMP device.

For the specific determination method, reference may be made to the relevant description in method 200, which will not be repeated here for the sake of brevity.

Case 1: the reference device is the legacy terminal.

Optionally, the RSRP offset related to the energy harvesting capability of the target AMP device may be the difference between the minimum required RSRP for the target AMP device to activate the energy harvesting module or to perform the energy harvesting operation and the minimum RSRP required by the network device side for the legacy terminal.

For example, if the minimum RSRP required by the network device for legacy terminal is x0 dBm, and the minimum required RSRP for the target AMP device to activate the energy harvesting module or to perform the energy harvesting operation is x1 dBm, then the RSRP offset related to the energy harvesting capability of the target AMP device is (x1 - x0) dB.

Optionally, the RSRP offset related to the backscatter capability of the target AMP device may be the difference between minimum required RSRP for the target AMP device to activate the backscattering module or to perform backscattering operation and the minimum RSRP required by the network device side.

For example, if the minimum RSRP required by the network side is y0 dBm, and the minimum required RSRP for the target AMP device to activate the backscattering module or to perform backscattering operation is y1 dBm, then the RSRP offset related to the backscatter capability of the target AMP device is (y1 - y0) dB.

Optionally, the RSRQ offset related to the energy harvesting capability of the target AMP device may be the difference between the minimum required RSRQ for the target AMP device to activate the energy harvesting module or to perform the energy harvesting operation and the minimum RSRQ required by the network device side.

For example, if the minimum RSRQ required by the network device for legacy terminal is z0 dB, and the minimum required RSRQ for the target AMP device to activate the energy harvesting module or to perform the energy harvesting operation is z1 dB, then the RSRQ offset related to the energy harvesting capability of the target AMP device is (z1 - z0) dB.

Optionally, the RSRQ offset related to the backscatter capability of the target AMP device may be the difference between the minimum required RSRQ for the target AMP device to activate the backscattering module or to perform backscattering operation and the minimum RSRQ required by the network device side.

For example, if the minimum RSRQ required by the network device for the legacy terminal is w0 dB, and the minimum required RSRQ for the target AMP device to activate the backscattering module or to perform backscattering operation is w1 dB., then the RSRQ offset related to the backscatter capability of the target AMP device is (w1 - w0) dB.

In Case 2: the reference device is the reference AMP device.

Optionally, the RSRP offset related to the energy harvesting capability of the target AMP device may be the difference between the minimum required RSRP for the target AMP device to activate the energy harvesting module or to perform the energy harvesting operation and the minimum required RSRP for the reference AMP device to activate the energy harvesting module or to perform the energy harvesting operation.

For example, if the minimum required RSRP for the reference AMP device to activate the energy harvesting module or to perform the energy harvesting operation is x2 dBm, and the minimum required RSRP for the target AMP device to activate the energy harvesting module or to perform the energy harvesting operation is x1 dBm, then the RSRP offset related to the energy harvesting capability of the target AMP device is (x1 - x2) dB.

Optionally, the RSRP offset related to the backscatter capability of the target AMP device may be the difference between the minimum required RSRP for the target AMP device to activate the backscattering module or to perform backscattering operation and the minimum required RSRP for the reference AMP device to activate the backscattering module or to perform backscattering operation.

For example, if the minimum required RSRP for the reference AMP device to activate the backscattering module or to perform backscattering operation is y2 dBm, and the minimum required RSRP for the target AMP device to activate the backscattering module or to perform backscattering operation is y1 dBm, then the RSRP offset related to the backscatter capability of the target AMP device is (y1 - y2) dB.

Optionally, the RSRQ offset related to the energy harvesting capability of the target AMP device may be the difference between the minimum required RSRQ for the target AMP device to activate the energy harvesting module or to perform energy harvesting operation and the minimum required RSRP for the reference AMP device to activate the backscattering module or to perform backscattering operation.

For example, if the minimum required RSRQ for the reference AMP device to activate the energy harvesting module or to perform energy harvesting operation is z2 dB, and the minimum required RSRQ for the target AMP device to activate the energy harvesting module or to perform energy harvesting operation is z1 dB, then the RSRQ offset related to the energy harvesting capability of the target AMP device is (z1 - z2) dB.

Optionally, the RSRQ offset related to the backscatter capability of the target AMP device may be the difference between the minimum required RSRQ for the target AMP device to activate the backscattering module or to perform backscattering operation and the minimum RSRQ required by the network device side.

For example, if the minimum required RSRQ for the AMP device to activate the backscattering module or to perform backscattering operation is w2 dB, and the minimum required RSRP for the target AMP device to activate the backscattering module or to perform backscattering operation is w1 dB, then the RSRP compensation parameter related to the backscatter capability of the target AMP device is (w1 - w2) dB.

Embodiment 2: the target operation includes initiating neighbour cell measurements.

In Embodiment 2, the reference parameter may include parameters used to determine whether to trigger neighbour cell measurements.

For example, the reference parameter may include one or more of the reference $S_{IntraSeachP}$, the reference $S_{nonIntraSearchP}$, the reference $S_{IntraSearchQ}$, or the reference $S_{nonIntraSearchQ}$.

The way to determining the target offset will be illustrated below by taking the reference $S_{IntraSearchP}$ as an example. The target offset is an RSRP offset relative to the reference $S_{IntraSearchP}$ (denoted as a first RSRP offset). For the offset relative to the reference $S_{IntraSearchQ}$, the reference $S_{nonIntraSearchP}$, or the reference $S_{nonIntraSearchQ}$, the determination way is similar, which will not be repeated here.

In some embodiments, the first RSRP offset is determined according to the difference in capabilities between the target AMP device and the reference device.

For example, the reference device is the legacy terminal, the reference $S_{IntraSearchP}$ is the $S_{IntraSearchP}$ targeting the legacy terminal. If the minimum RSRP required by the network device side for the legacy terminal is x0 dBm, and the minimum required RSRP for the target AMP device to activate the energy harvesting module or to perform energy harvesting operation is x1 dBm, then the first RSRP offset may be (x1 - x0) dB.

In another example, the reference device is the legacy terminal, and the reference $S_{IntraSearchP}$ is the $S_{IntraSearchP}$ targeting the legacy terminal. If the minimum RSRP required by the network device side for the legacy terminal is y0 dBm, and the minimum required RSRP for the target AMP device to activate the backscattering module or to perform backscattering operation is y1 dBm, then the first RSRP offset may be (y1 - y0) dB.

For example, the reference device is the reference AMP device, and the reference $S_{IntraSearchP}$ is the $S_{IntraSearchP}$ targeting the reference AMP device. If the minimum required RSRP for the reference AMP device to activate the backscattering module or to perform backscattering operation is x2 dBm, and the minimum required RSRP for the target AMP device to activate the energy harvesting module or perform energy harvesting operation is x1 dBm, then the first RSRP offset may be (x1 - x2) dB.

In another example, the reference device is the reference AMP device, and the reference $S_{IntraSearchP}$ is the $S_{IntraSearchP}$ targeting the reference AMP device. If the minimum required RSRP for the reference AMP device to activate the backscattering module or to perform backscattering operation is y2 dBm, and the minimum required RSRP for the target AMP device to activate the backscattering module or to perform backscattering operation is y1 dBm, then the first RSRP offset may be (y1 - y2) dB.

Embodiment 3: the target operation includes relaxing neighbour cell measurements.

In Embodiment 3, the reference parameter may include parameters used to determine whether to relax neighbour cell measurements, such as $S_{SearchDeltaP}$, which is denoted as reference $S_{SearchDeltaP}$.

Accordingly, in Embodiment 3, the target offset is the RSRP offset relative to $S_{SearchDeltaP}$ (denoted as the second RSRP offset).

In some embodiments, the second RSRP offset is determined according to the difference in capabilities between the target AMP device and the reference device.

For example, the reference device is the legacy terminal, and the reference $S_{SearchDeltaP}$ is the $S_{SearchDeltaP}$ targeting the legacy terminal. If the minimum RSRP required by the network device side for the legacy terminal is x0 dBm, and the minimum required RSRP for the target AMP device to activate the energy harvesting module or to perform energy harvesting operation is x1 dBm, then the second RSRP offset may be (x1 - x0) dB.

In another example, the reference device is the legacy terminal, and the reference $S_{SearchDeltaP}$ is the $S_{SearchDeltaP}$ targeting the legacy terminal. If the minimum RSRP required by the network device side for the legacy terminal is y0 dBm, and the minimum required RSRP for the target AMP device to activate the backscattering module or to perform backscattering operation is y1 dBm, then the second RSRP offset may be (y1 - y0) dB.

For example, the reference device is the reference AMP device, the reference $S_{SearchDeltaP}$ is the $S_{SearchDeltaP}$ targeting the reference AMP device. If the minimum required RSRP for the reference AMP device to activate the backscattering module or to perform backscattering operation is x2 dBm, and the minimum required RSRP for the target AMP device to activate the energy harvesting module or to perform the energy harvesting operation is x1 dBm, then the second RSRP offset may be (x1 - x2) dB.

In another example, the reference device is the reference AMP device, and the reference $S_{SearchDeltaP}$ is the $S_{SearchDeltaP}$ targeting the reference AMP device. If the minimum required RSRP for the reference AMP device to activate the backscattering module or to perform backscattering operation is y2 dBm, and the minimum required RSRP for the target AMP device to activate the backscattering module or to perform backscattering operation is y1 dBm, then the second RSRP offset may be (y1 - y2) dB.

Embodiment 4: the target operation includes determining whether the reference device is not located at cell edge

In this Embodiment 4, the reference parameter may include parameters for determining whether the reference device is not located at the cell edge, such as the reference $S_{SearchThresholdP}$, and/or the reference $S_{SearchThresholdQ}$.

Accordingly, the target offset may include an RSRP offset (denoted as a third RSRP offset) relative to the reference $S_{SearchThresholdP}$ and/or an RSRQ offset (a third RSRQ offset) relative to the reference $S_{SearchThresholdQ}$. The way to determine the third RSRP offset will be described below. The way to determine the third RSRQ offset is similar, which will not be repeated here for the sake of brevity.

In some embodiments, the third RSRP offset is determined according to the difference in capabilities between the target AMP device and the reference device.

For example, the reference device is the legacy terminal, and the reference $S_{SearchThresholdP}$ is the $S_{SearchThresholdP}$ corresponding to the legacy terminal. If the minimum RSRP required by the network device side for the legacy terminal is x0 dBm, and the minimum required RSRP for the target AMP device to activate the energy harvesting module or to perform energy harvesting operation is x1 dBm, then the third RSRP offset may be (x1 - x0) dB.

In another example, the reference device is t;he legacy terminal, and the reference $S_{SearchThresholdP}$ is the $S_{SearchThresholdP}$ corresponding to the legacy terminal. If the minimum RSRP required by the network device side for the legacy terminal is y0 dBm, and the minimum required RSRP for the target AMP device to activate the backscattering module or to perform backscattering operation is y1 dBm, then the third RSRP offset may be (y1 - y0) dB.

For example, the reference device is the reference AMP device, and the reference $S_{SearchThresholdP}$ is the $S_{SearchThresholdP}$ corresponding to the reference AMP device. If the minimum required RSRP for the reference AMP device to activate the backscattering module or to perform backscattering operation is x2 dBm, and the minimum required RSRP for the target AMP device to activate the energy harvesting module or to perform energy harvesting operation is x1 dBm, then the third RSRP offset may be (x1 - x2) dB.

In another example, the reference device is the reference AMP device, and the reference $S_{SearchThresholdP}$ is the $S_{SearchThresholdP}$ corresponding to the reference AMP device. If the minimum required RSRP for the reference AMP device to activate the backscattering module or to perform backscattering operation is y2 dBm, and the minimum required RSRP for the target AMP device to activate the backscattering module or to perform backscattering operation is y1 dBm, then the third RSRP offset may be (y1 - y2) dB.

In summary, in the embodiments of the present application, the target AMP device may adjust the measurement results of the cell according to the difference between its own capability and the capability of the reference device, and further perform operations related to cell selection or cell reselection, according to the adjusted measurement results and in combination with the reference parameters corresponding to the reference device, which is conducive to ensuring the mobility management performance of the target AMP device.

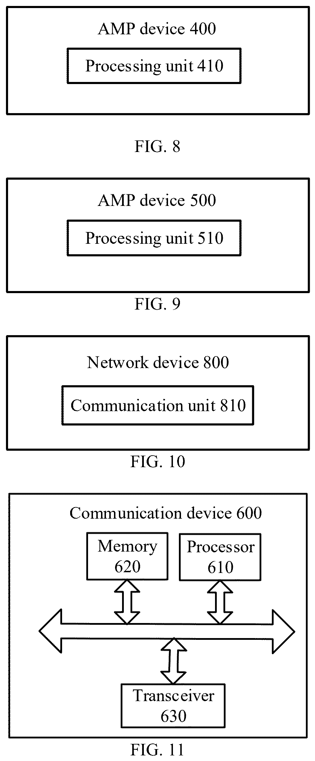

With reference to FIGS. 6 and 7, the method embodiments of the present application are described in detail above. The device embodiments of the present application will be described in detail below with reference to FIGS. 8 to 13. It should be understood that the device embodiments and the method embodiments correspond to each other, and reference may be made to the method embodiments for the similar descriptions.

FIG. 8 shows a schematic block diagram of an ambient power (AMP) device 400 according to an embodiment of the present application . As shown in FIG. 8, the AMP device 400 includes:

a processing unit 410, configured to perform a target operation according to a target parameter, where the target operation includes an operation related to cell selection and/or cell reselection, and the target parameter is related to a capability of the target AMP device.

In some embodiments, the capability of the target AMP device include:

an energy harvesting-related capability of the target AMP device; and/or

a backscatter-related capability of the target AMP device.

In some embodiments, the energy harvesting-related capability of the target AMP device includes:

minimum required signal received power for the target AMP device to perform energy harvesting; and/or minimum required signal received quality for the target AMP device to perform energy harvesting.

In some embodiments, the backscatter-related capability of the target AMP device includes:

minimum required signal received power for the target AMP device to perform backscattering; and/or minimum required signal received quality for the target AMP device to perform backscattering.

In some embodiments, the target parameter is predefined, or the target parameter is configured by a network device, or the target parameter is determined by the target AMP device.

In some embodiments, the target parameter is determined according to reference parameter, where the reference parameter includes a parameter for a reference device to perform the target operation, and the reference device is a non-AMP device or a reference AMP device.

In some embodiments, that the target parameter is determined according to the reference parameter includes: that the target parameter is determined according to the reference parameter and a target offset, where the target offset is determined according to a difference in capabilities between the target AMP device and the reference device.

In some embodiments, the target offset is determined by the target AMP device according to the difference in capabilities between the target AMP device and the reference device.

In some embodiments, the target offset is selected by the target AMP device from M offsets, the M offsets correspond to M types of AMP device capabilities, and the M offsets are offsets between parameters for performing the target operation corresponding to the M types of AMP device capabilities and a parameter for performing the target operation corresponding to a capability of the reference AMP device; the target offset is an offset corresponding to the capability of the target AMP device; and M is a positive integer.

In some embodiments, the M offsets are predefined, or the M offsets are configured by a network device.

In some embodiments, the reference parameter is predefined, or the reference parameter configured by a network device.

In some embodiments, the target parameter is a set of parameters among a plurality of sets of parameters, the plurality of sets of parameters correspond to different AMP device capabilities, and each set of parameters includes a parameter for an AMP device with a corresponding capability to perform the target operation.

In some embodiments, the plurality of sets of parameters are predefined, or the plurality of sets of parameters are configured by a network device.

In some embodiments, the target parameter includes a target signal received power related parameter and/or a target signal received quality related parameter, the target signal received power related parameter is used to determine a cell selection signal reception level value that corresponds to a signal received power of a cell measured by the target AMP device, and the target signal received quality related parameter is used to determine a cell selection signal received quality value that corresponds to a signal received quality of the cell measured by the target AMP device.

In some embodiments, the target signal received power related parameter includes a target signal received power compensation parameter which is used to compensate for the signal received power of the cell measured by the target AMP device.

In some embodiments, the target signal quality related parameter includes a target signal received quality compensation parameter which is used to compensate for the signal received quality of the cell measured by the target AMP device.

In some embodiments, the target parameter includes a first target measurement result threshold, and the first target measurement result threshold is used for the target AMP device to determine whether to initiate neighbour cell measurements.

In some embodiments, the first target measurement result threshold includes a first target signal received power threshold and/or a first target signal received quality threshold.

In some embodiments, the first target signal received power threshold includes:
a signal received power threshold for intra-frequency measurements and/or a signal received power threshold for non-inter-frequency measurements.

In some embodiments, the first target signal quality threshold includes:
a signal received quality threshold for intra-frequency measurements and/or a signal received quality threshold for non-intra-frequency measurements.

In some embodiments, the target parameter includes a target measurement result variation threshold, and the target measurement result variation threshold is used for the target AMP device to determine whether to relax neighbour cell measurements.

In some embodiments, the target measurement result variation threshold includes a target signal received power variation threshold.

In some embodiments, the target parameter includes a second target measurement result threshold, and the second target measurement result threshold is used to determine whether the target AMP device is not located at cell edge.

In some embodiments, the second target measurement result threshold includes a second target signal received power variation threshold and/or a second target signal received quality threshold.

In some embodiments, the target operation includes one or more of the following operations:
cell selection, cell reselection, initiating neighbour cell measurements, relaxing neighbour cell measurements, or determining whether the target AMP device is not located at cell edge.

Optionally, in some embodiments, the communication unit may be a communication interface, a transceiver, or an input/output interface of a communication chip or a system on chip. The processing unit mentioned above may include one or more processors.

It should be understood that the AMP device 400 according to the embodiments of the present application may correspond to the AMP device in the method embodiments of the present application, and the above-mentioned and other operations and/or functions of each unit in the AMP device 400 are respectively for realizing the corresponding processes of the AMP device in the method shown in FIG. 6, which will not be repeated here for the sake of brevity.

FIG. 10 shows a schematic block diagram of an ambient power (AMP) device 500 according to an embodiment of the present application. As shown in FIG. 10, the AMP device 500 includes:
a processing unit 510, configured to:

adjust, according to a difference in capabilities between the AMP device and a reference device, a measurement result of a cell measured by the AMP device to obtain a target measurement result, where the reference device is a non-AMP device or a reference AMP device; and
perform a target operation according to the target measurement result and a reference parameter, where the target operation includes an operation related to cell selection and/or cell reselection, and the reference parameter includes a parameter for the reference device to perform the target operation.

In some embodiments, a capability of the AMP device includes:

a energy harvesting-related capability of the AMP device; and/or
a backscatter-related capability of the AMP device.

In some embodiments, the energy harvesting-related capability of the AMP device includes:

minimum required signal received power for the AMP device to perform energy harvesting; and/or
minimum required signal received quality for the AMP device to perform energy harvesting.

In some embodiments, the backscatter-related capability of the AMP device includes:

minimum required signal received power for the AMP device to perform backscattering; and/or
minimum required signal received quality for the AMP device to perform backscattering.

In some embodiments, the processing unit 510 is further configured to:

determine a target offset according to the difference in capabilities between the AMP device and the reference device; and
adjust the measurement result of the cell to obtain the target measurement result, according to the target offset,.

In some embodiments, the reference parameter includes a reference signal received power related parameter and/or a reference signal received quality related parameter, the reference signal received power related parameter is used to determine a cell selection signal reception level value that corresponds to the signal received power of a cell measured by the reference AMP device, and the reference signal received quality related parameter is used to determine a cell selection signal received quality value that corresponds to the signal received quality of the cell measured by the reference AMP device.

In some embodiments, the reference parameter includes a first reference measurement result threshold, and the first reference measurement result threshold is used for the reference AMP device to determine whether to initiate neighbour cell measurements.

In some embodiments, the first reference measurement result threshold includes a first reference signal received power threshold and/or a first reference signal received quality threshold.

In some embodiments, the first reference signal received power threshold includes:

a signal received power threshold for intra-frequency measurements and/or a signal received power threshold for non-inter-frequency measurements.

In some embodiments, the first reference signal quality threshold includes:

a signal received quality threshold for intra-frequency measurements and/or a signal received quality threshold for non-inter-frequency measurements.

In some embodiments, the reference parameter includes a reference measurement result variation threshold, and the reference measurement result variation threshold is used for the reference AMP device to determine whether to relax neighbour cell measurements.

In some embodiments, the reference measurement result variation threshold includes a reference signal received power variation threshold.

In some embodiments, the reference parameter includes a second reference measurement result threshold, and the second reference measurement result threshold is used to determine whether the reference AMP device is not located at cell edge.

In some embodiments, the second reference measurement result threshold includes a second reference signal received power variation threshold and/or a second reference signal received quality threshold.

Optionally, in some embodiments, the processing unit may include one or more processors.

It should be understood that the AMP device 500 according to the embodiments of the present application may correspond to the AMP device in the method embodiments of the present application, and the above-mentioned and other operations and/or functions of each unit in the AMP device 500 are respectively for realizing the corresponding processes of the AMP device in the method shown in FIG. 7, which will not be repeated here for the sake of brevity.

FIG. 10 shows a schematic block diagram of a network device 800 according to an embodiment of the present application. As shown in FIG. 10, the network device 800 includes:

a communication unit 810, configured to transmit first information to an ambient power (AMP) device; where the first information is used for the target AMP device to determine a target parameter, and the target parameter is related to a capability of the target AMP device; the target operation is used for the target AMP device to perform a target operation, and the target operation includes an operation related to cell selection and/or cell reselection.

In some embodiments, the first information is used to indicate a plurality of sets of parameters, the target parameter is a set of parameters among the plurality of sets of parameters, the plurality of sets of parameters correspond to different AMP device capabilities, and each set of parameters includes a parameter for an AMP device with a corresponding capability to perform the target operation.

In some embodiments, the first information is used to indicate a reference parameter and M offsets, the M offsets correspond to M types of AMP device capabilities, and the M offsets are offsets between parameters for performing the target operation corresponding to the M types of AMP device capabilities and a parameter for performing the target operation corresponding to a capability of a reference AMP device; M is a positive integer; and the reference device is a non-AMP device or a reference AMP device.

In some embodiments, the first information is used to indicate a reference parameter, the target parameter is determined according to the reference parameter, and the reference parameter includes a parameter for a reference device to perform the target operation, and the reference device is a non-AMP device or a reference AMP device.

In some embodiments, the target parameter is determined according to the reference parameter and a target offset, and the target offset is determined according to a difference in capabilities between the target AMP device and the reference device.

In some embodiments, the target parameter includes a target signal received power related parameter and/or a target signal received quality related parameter, where the target signal received power related parameter is used to determine a cell selection signal reception level value that corresponds to a signal received power of a cell measured by the target AMP device, and the target signal received quality related parameter is used to determine a cell selection signal received quality value that corresponds to a signal received quality of the cell measured by the target AMP device.

In some embodiments, the target signal received power related parameter includes a target signal received power compensation parameter which is used to compensate for the signal received power of the cell measured by the target AMP device.

In some embodiments, the target signal quality related parameter includes a target signal received quality compensation parameter which is used to compensate for the signal received quality of the cell measured by the target AMP device.

In some embodiments, the target parameter includes a first target measurement result threshold, and the first target measurement result threshold is used for the target AMP device to determine whether to initiate neighbour cell measurements.

In some embodiments, the first target measurement result threshold includes: a first target signal received power threshold and/or a first target signal received quality threshold.

In some embodiments, the first target signal received power threshold includes:
a signal received power threshold for intra-frequency measurements and/or a signal received power threshold for non-inter-frequency measurements.

In some embodiments, the first target signal quality threshold includes:
a signal received quality threshold for intra-frequency measurements and/or a signal received quality threshold for non-inter-frequency measurements.

In some embodiments, the target parameter includes a target measurement result variation threshold, and the target measurement result variation threshold is used for the target AMP device to determine whether to relax the neighbour cell measurements.

In some embodiments, the target measurement result variation threshold includes a target signal received power variation threshold.

In some embodiments, the target parameter includes a second target measurement result threshold, and the second target measurement result threshold is used to determine whether the target AMP device is not located at cell edge.

In some embodiments, the second target measurement result threshold includes a second target signal received power variation threshold and/or a second target signal received quality threshold.

Optionally, in some embodiments, the communication unit may be a communication interface, a transceiver, or an input/output interface of a communication chip or a system on chip. The processing unit mentioned above may include one or more processors.

It should be understood that the network device 800 according to the embodiments of the present application may correspond to the network device in the method embodiments of the present application, and the above-mentioned and other operations and/or functions of each unit in the network device 800 are respectively for implementing the corresponding processes of the network device in the method shown in FIG. 6, which will not be repeated here for the sake of brevity.

FIG. 11 is a schematic structural diagram of a communication device 600 provided in an embodiment of the present application. The communication device 600 shown in FIG. 11 includes a processor 610, which can invoke and execute a computer program from a memory to implement the methods in the embodiments of the present application.

Optionally, as shown in FIG. 11, the communication device 600 may further include a memory 620. The processor 610 can invoke and execute a computer program from the memory 620 to implement the methods in the embodiments of the present application.

The memory 620 may be a separate device independent of the processor 610, or may be integrated into the processor 610.

Optionally, as shown in FIG. 11, the communication device 600 may further include a transceiver 630, and the processor 610 may control the transceiver 630 to communicate with other devices, specifically, the transceiver 630 may transmit information or data to other devices, or receive information or data transmitted by other devices.

The transceiver 630 may include a transmitter and a receiver. The transceiver 630 may further include antenna(s), and the number of antenna(s) may be one or more.

Optionally, the communication device 600 may specifically be the network device in the embodiments of the present application, and the communication device 600 may implement the corresponding processes implemented by the network device in each method in the embodiments of the present application, which will not be repeated here for the sake of brevity.

Optionally, the communication device 600 may specifically be the AMP device in the embodiments of the present application, and the communication device 600 may implement the corresponding processes implemented by the AMP device in each method in the embodiments of the present application, which will not be repeated here for the sake of brevity.

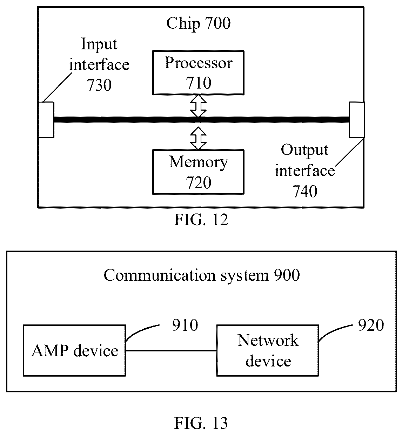

FIG. 12 is a schematic structural diagram of a chip according to an embodiment of the present application. The chip 700 shown in FIG. 12 includes a processor 710, which can invoke and execute a computer program from a memory to implement the methods in the embodiments of the present application.

Optionally, as shown in FIG. 12, the chip 700 may further include a memory 720. The processor 710 can invoke and execute a computer program from the memory 720 to implement the methods in the embodiments of the present application.

The memory 720 may be a separate device independent of the processor 710, or may be integrated into the processor 710.

Optionally, the chip 700 may further include an input interface 730. The processor 710 may control the input interface 730 to communicate with other devices or chips, and specifically, the input interface 730 may obtain information or data transmitted by other devices or chips.

Optionally, the chip 700 may further include an output interface 740. The processor 710 may control the output interface 740 to communicate with other devices or chips, and specifically, the output interface 740 may output information or data to other devices or chips.

Optionally, the chip may be applied to the network device in the embodiments of the present application, and the chip may implement the corresponding processe implemented by the network device in each method in the embodiments of the present application, which will not be repeated here for the sake of brevity.

Optionally, the chip may be applied to the AMP device in the embodiments of the present application, and the chip may implement the corresponding processes implemented by the AMP device in each method in the embodiments of the present application, which will not be repeated here for the sake of brevity.

It should be understood that the chip mentioned in the embodiments of the present application may also be called a system-on-chip, a system chip, a chip system or a system on chip.

FIG. 13 is a schematic block diagram of a communication system 900 provided in an embodiment of the present application. As shown in FIG. 13, the communication system 900 includes an AMP device 910 and a network device 920.

The AMP device 910 may be configured to implement the corresponding functions implemented by the AMP device in the above methods, and the network device 920 may be configured to implement the corresponding functions implemented by the network device in the above methods, which will not be repeated here for the sake of brevity.

It should be understood that the processor in the embodiments of the present application may be an integrated circuit chip and have a processing capability of signals. In the implementation process, various steps of the above method embodiments may be completed by an integrated logic circuit of hardware in the processor or an instruction in a software form. The above processor may be a general-purpose processor, a Digital Signal Processor (DSP), an Application Specific Integrated Circuit (ASIC), a Field Programmable Gate Array (FPGA) or other programmable logic devices, a discrete gate or transistor logic device, a discrete hardware component. Various methods, steps and logical block diagrams disclosed in the embodiments of the present application may be implemented or performed. A general-purpose processor may be a microprocessor, or the processor may also be any legacy processor, etc. The steps of the method disclosed in combination with the embodiments of the present application may be directly embodied as being performed and completed by a hardware decoding processor, or by using a combination of hardware and software modules in the decoding processor. The software module may be located in the mature storage medium in the art such as the random memory, the flash memory, the read-only memory, the programmable read-only memory or electrically erasable programmable memory, the register. The storage medium is located in the memory, and the processor reads the information in the memory and completes the steps of the above methods in combination with its hardware.

It may be understood that, the memory in the embodiments of the present application may be a volatile memory or a non-volatile memory, or may include both volatile and non-volatile memories. Herein, the non-volatile memory may be a Read-Only Memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a Random Access Memory (RAM), which is used as an external cache. Through illustrative, rather than limiting, illustration, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct rambus random access memory (Direct Rambus RAM, DR RAM). It should be noted that the memory of the system and the method described herein is intended to include, but not limited to, these and any other suitable types of memories.

It should be understood that the above memory is exemplary but not limiting illustration, e.g., the memory in embodiments of the present application may also be a static Random Access Memory (static RAM, SRAM), a Dynamic Random Access Memory (dynamic RAM, DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM), etc. That is, the memory in the embodiments of the present application is intended to include, but not limited to, these and any other suitable types of memories.

The embodiments of the present application further provide a computer-readable storage medium configured to store a computer program.

Optionally, the computer-readable storage medium may be applied to the network device in the embodiments of the present application, and the computer program causes a computer to perform the corresponding procedure implemented by the network device in the various methods of the embodiments of the present application, which will not be repeated here for the sake of brevity.

Optionally, the computer-readable storage medium may be applied to the AMP device in the embodiments of the present application, and the computer program causes a computer to perform the corresponding procedure implemented by the AMP device in the various methods of the embodiments of the present application, which will not be repeated here for the sake of brevity.

The embodiments of the present application further provide a computer program product including computer program instructions.

Optionally, the computer program product may be applied to the network device in the embodiments of the present application, and the computer program instructions causes a computer to perform the corresponding procedure implemented by the network device in the various methods of the embodiments of the present application, which will not be repeated here for the sake of brevity.

Optionally, the computer program product may be applied to the AMP device in the embodiments of the present application, and the computer program instructions causes a computer to perform the corresponding procedure implemented by the AMP device in the various methods of the embodiments of the present application, which will not be repeated here for the sake of brevity.

The embodiments of the present application further provide a computer program.

Optionally, the computer program may be applied to the network device in the embodiments of the present application, the computer program when being executed on a computer, causes the computer to perform the corresponding procedure implemented by the network device in the various methods of the embodiments of the present application, which will not be repeated here for the sake of brevity.

Optionally, the computer program may be applied to the AMP device in the embodiments of the present application, the computer program when being executed on a computer, causes the computer to perform the corresponding procedure implemented by the AMP device in the various methods of the embodiments of the present application, which will not be repeated here for the sake of brevity.

Those ordinary skilled in the art may realize that units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present application.

It may be clearly understood by those skilled in the art that, for convenience and brevity of the description, the specific working procedures of the system, the apparatus and the unit described above may refer to the corresponding procedures in the above method embodiments, which will not be repeated here.

In the several embodiments provided by the present application, it should be understood that, the disclosed systems, apparatus, and method may be implemented in other ways. For example, the apparatus embodiments described above are only schematic, for example, division of the units is only division of logical functions, and there may be other division methods in an actual implementation, for example, a plurality of units or components may be combined or integrated into another system, or some features may be ignored or not performed. On the other hand, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present application may be integrated into one processing unit, or the various units may exist physically separately, or two or more units may be integrated into one unit.

If the described functions are implemented in the form of a software functional unit and sold or used as an independent product, they may be stored in a computer-readable storage medium. For this understanding, the technical solutions of the present application essentially, or a part of the technical solutions that contribute to the prior art, or a part of the technical solutions, may be embodied in the form of a software product, and the computer software product is stored in a storage medium, and includes a plurality of instructions for enabling a computer device (which may be a personal computer, a server, or a network device, etc.) to perform all or some of steps of the methods described in the various embodiments of the present application. And, the storage medium mentioned above includes a USB flash drive (U disk), a mobile hard disk, a Read-Only Memory (ROM), a Random Access Memory (RAM), a diskette, or an optical disk, and various mediums that may store program codes.

The above content is only specific implementations of the present application, but the protection scope of the present application is not limited thereto, and any skilled familiar with this technical field may easily think of changes or substitutions within the technical scope disclosed in the present application, which should be all covered within the protection scope of the present application. Therefore, the protection scope of the present application should be determined based on the protection scope of the claims.

**Claims**

1. A wireless communication method, comprising:
   performing, by a target ambient power (AMP) device according to a target parameter, a target operation, wherein the target operation comprises an operation related to cell selection and/or cell reselection, and the target parameter is related to a capability of the target AMP device.

2. The method according to claim 1, wherein the capability of the target AMP device comprises:

   an energy harvesting-related capability of the target AMP device; and/or
   a backscatter-related capability of the target AMP device.

3. The method according to claim 2, wherein the energy harvesting-related capability of the target AMP device comprises:

   minimum required signal received power for the target AMP device to perform energy harvesting; and/or
   minimum required signal received quality for the target AMP device to perform energy harvesting.

4. The method according to claim 2 or 3, wherein the backscatter-related capability of the target AMP device comprises:

   minimum required signal received power for the target AMP device to perform backscattering; and/or
   minimum required signal received quality for the target AMP device to perform backscattering.

5. The method according to any one of claims 1 to 4, wherein the target parameter is predefined, the target parameter is configured by a network device, or the target parameter is determined by the target AMP device.

6. The method according to any one of claims 1 to 5, wherein the target parameter is determined according to a reference parameter, the reference parameter comprises a parameter for a reference device to perform the target operation, and the reference device is a non-AMP device or a reference AMP device.

7. The method according to claim 6, wherein that the target parameter is determined according to the reference parameter comprises:
   that the target parameter is determined according to the reference parameter and a target offset, wherein the target offset is determined according to a difference in capabilities between the target AMP device and the reference device.

8. The method according to claim 7, wherein the target offset is determined by the target AMP device according to the difference in capabilities between the target AMP device and the reference device.

9. The method according to claim 7, wherein the target offset is selected by the target AMP device from M offsets, the M offsets correspond to M types of AMP device capabilities, and the M offsets are offsets between parameters for performing the target operation corresponding to the M types of AMP device capabilities and a parameter for performing the target operation corresponding to a capability of the reference AMP device; the target offset is an offset corresponding to the capability of the target AMP device; and M is a positive integer.

10. The method according to claim 9, wherein the M offsets are predefined, or the M offsets are configured by a network device.

11. The method according to any one of claims 6 to 10, wherein the reference parameter is predefined, or the reference parameter is configured by a network device.

12. The method according to any one of claims 1 to 5, wherein the target parameter is a set of parameters among a plurality of sets of parameters, the plurality of sets of parameters correspond to different AMP device capabilities, and each set of parameters comprises a parameter for an AMP device with a corresponding capability to perform the target operation.

13. The method according to claim 12, wherein the plurality of sets of parameters are predefined, or the plurality of sets of parameters are configured by a network device.

14. The method according to any one of claims 1 to 13, wherein the target parameter comprises a target signal received power related parameter and/or a target signal received quality related parameter, wherein the target signal received power related parameter is used to determine a cell selection signal reception level value that corresponds to a signal received power of a cell measured by the target AMP device, and the target signal received quality related parameter is used to determine a cell selection signal received quality value that corresponds to a signal received quality of the cell measured by the target AMP device.

15. The method according to claim 14, wherein the target signal received power related parameter comprises a target signal received power compensation parameter which is used to compensate for the signal received power of the cell measured by the target AMP device.

16. The method according to claim 14 or 15, wherein the target signal quality related parameter comprises a target signal received quality compensation parameter which is used to compensate for the signal received quality of the cell measured by the target AMP device.

17. The method according to any one of claims 1 to 16, wherein the target parameter comprises a first target measurement result threshold, and the first target measurement result threshold is used for the target AMP device to determine whether to initiate neighbour cell measurements.

18. The method according to claim 17, wherein the first target measurement result threshold comprises a first target signal received power threshold and/or a first target signal received quality threshold.

19. The method according to claim 18, wherein the first target signal received power threshold comprises:
a signal received power threshold for intra-frequency measurements and/or a signal received power threshold for non-intra-frequency measurements.

20. The method according to claim 18 or 19, wherein the first target signal quality threshold comprises:
a signal received quality threshold for intra-frequency measurements and/or a signal received quality threshold for non-intra-frequency measurements.

21. The method according to any one of claims 1 to 20, wherein the target parameter comprises a target measurement result variation threshold, and the target measurement result variation threshold is used for the target AMP device to determine whether to relax neighbour cell measurements.

22. The method according to claim 21, wherein the target measurement result variation threshold comprises a target signal received power variation threshold.

23. The method according to any one of claims 1 to 22, wherein the target parameter comprises a second target measurement result threshold, and the second target measurement result threshold is used to determine whether the target AMP device is not located at cell edge.

24. The method according to claim 23, wherein the second target measurement result threshold comprises a second target signal received power variation threshold and/or a second target signal received quality threshold.

25. The method according to any one of claims 1 to 24, wherein the target operation comprises one or more of the following operations: cell selection, cell reselection, initiating neighbour cell measurements, relaxing neighbour cell measurements, or determining whether the target AMP device is not located at cell edge.

26. A wireless communication method, comprising:

adjusting, by a target ambient power (AMP) device according to a difference in capabilities between the AMP device and a reference device, a measurement result of a cell measured by the target AMP device to obtain a target measurement result, wherein the reference device is a non-AMP device or a reference AMP device; and performing a target operation according to the target measurement result and a reference parameter, wherein the target operation comprises an operation related to cell selection and/or cell reselection, and the reference parameter comprises a parameter for the reference device to perform the target operation.

**27.** The method according to claim 26, wherein a capability of the target AMP device comprises:

an energy harvesting-related capability of the target AMP device; and/or
a backscatter-related capability of the target AMP device.

**28.** The method according to claim 27, wherein the energy harvesting-related capability of the target AMP device comprises:

minimum required signal received power for the target AMP device to perform energy harvesting; and/or
minimum required signal received quality for the target AMP device to perform energy harvesting.

**29.** The method according to claim 27 or 28, wherein the backscatter-related capability of the target AMP device comprises:

minimum required signal received power for the target AMP device to perform backscattering; and/or
minimum required signal received quality for the target AMP device to perform backscattering.

**30.** The method according to any one of claims 26 to 29, wherein adjusting, by a target ambient power (AMP) device according to the difference in capabilities between the AMP device and the reference device, the measurement result of the cell measured by the target AMP device to obtain the target measurement result comprises:

determining, by the target AMP device, a target offset according to the difference in the capabilities between the target AMP device and the reference device; and
adjusting, according to the target offset, the measurement result of the cell to obtain the target measurement result.

**31.** The method according to any one of claims 26 to 30, wherein the reference parameter comprises a reference signal received power related parameter and/or a reference signal received quality related parameter, wherein the reference signal received power related parameter is used to determine a cell selection signal reception level value that corresponds to a signal received power of the cell measured by the reference AMP device, and the reference signal received quality related parameter is used to determine a cell selection signal received quality value that corresponds to a signal received quality of the cell measured by the reference AMP device.

**32.** The method according to any one of claims 26 to 31, wherein the reference parameter comprises a first reference measurement result threshold, and the first reference measurement result threshold is used for the reference AMP device to determine whether to initiate neighbour cell measurements.

**33.** The method according to claim 32, wherein the first reference measurement result threshold comprises a first reference signal received power threshold and/or a first reference signal received quality threshold.

**34.** The method according to claim 33, wherein the first reference signal received power threshold comprises:
a signal received power threshold for intra-frequency measurements and/or a signal received power threshold for non-intra-frequency measurements.

**35.** The method according to claim 33 or 34, wherein the first reference signal quality threshold comprises:
a signal received quality threshold for intra-frequency measurements and/or a signal received quality threshold for non-intra-frequency measurements.

**36.** The method according to any one of claims 26 to 35, wherein the reference parameter comprises a reference measurement result variation threshold, and the reference measurement result variation threshold is used for the reference AMP device to determine whether to relax neighbour cell measurement.

**37.** The method according to claim 36, wherein the reference measurement result variation threshold comprises a reference signal received power variation threshold.

**38.** The method according to claim 36 or 37, wherein the reference parameter comprises a second reference measurement result threshold, and the second reference measurement result threshold is used to determine whether the reference AMP device is not located at cell edge.

39. The method according to claim 38, wherein the second reference measurement result threshold comprises a second reference signal received power variation threshold and/or a second reference signal received quality threshold.

40. A wireless communication method, comprising:
transmitting, by a network device, first information to a target ambient power (AMP) device, wherein the first information is used for the target AMP device to determine a target parameter, and the target parameter is related to a capability of the target AMP device; the target operation is used for the target AMP device to perform a target operation, and the target operation comprises an operation related to cell selection and/or cell reselection.

41. The method according to claim 40, wherein the first information is used to indicate a plurality of sets of parameters, the target parameter is a set of parameters among the plurality of sets of parameters, the plurality of sets of parameters correspond to different AMP device capabilities, and each set of parameters comprises a parameter for the AMP device with a corresponding capability to perform the target operation.

42. The method according to claim 40, wherein the first information is used to indicate a reference parameter and M offsets, the M offsets correspond to M types of AMP device capabilities, and the M offsets are offsets between parameters for performing the target operation corresponding to the M types of AMP device capabilities and a parameter for performing the target operation corresponding to a capability of a reference AMP device; M is a positive integer; and the reference device is a non-AMP device or a reference AMP device.

43. The method according to claim 40, wherein the first information is used to indicate a reference parameter, the target parameter is determined according to the reference parameter, the reference parameter comprises a parameter for a reference device to perform the target operation, and the reference device is a non-AMP device or a reference AMP device.

44. The method of claim 43, wherein the target parameter is determined according to the reference parameter and a target offset, and the target offset is determined according to a difference in capabilities between the target AMP device and the reference device.

45. The method according to any one of claims 40 to 44, wherein the target parameter comprises a target signal received power related parameter and/or a target signal received quality related parameter, wherein the target signal received power related parameter is used to determine a cell selection signal reception level value that corresponds to a signal received power of a cell measured by the target AMP device, and the target signal received quality related parameter is used to determine a cell selection signal received quality value that corresponds to a signal received quality of the cell measured by the target AMP device.

46. The method according to claim 45, wherein the target signal received power related parameter comprises a target signal received power compensation parameter which is used to compensate for the signal received power of the cell measured by the target AMP device.

47. The method according to claim 45 or 46, wherein the target signal quality related parameter comprises a target signal received quality compensation parameter which is used to compensate for the signal received quality of the cell measured by the target AMP device.

48. The method according to any one of claims 40 to 47, wherein the target parameter comprises a first target measurement result threshold, and the first target measurement result threshold is used for the target AMP device to determine whether to initiate neighbour cell measurements.

49. The method according to claim 48, wherein the first target measurement result threshold comprises a first target signal received power threshold and/or a first target signal received quality threshold.

50. The method according to claim 49, wherein the first target signal received power threshold comprises:
a signal received power threshold for intra-frequency measurements and/or a signal received power threshold for non-intra-frequency measurements.

51. The method according to claim 49 or 50, wherein the first target signal quality threshold comprises:
a signal received quality threshold for intra-frequency measurements and/or a signal received quality threshold for non-intra-frequency measurements.

52. The method according to any one of claims 40 to 51, wherein the target parameter comprises a target measurement result variation threshold, and the target measurement result variation threshold is used for the target AMP device to determine whether to relax neighbour cell measurements.

53. The method according to claim 52, wherein the target measurement result variation threshold comprises a target signal received power variation threshold.

54. The method according to any one of claims 40 to 53, wherein the target parameter comprises a second target measurement result threshold, and the second target measurement result threshold is used to determine whether the target AMP device is not located at cell edge.

55. The method according to claim 54, wherein the second target measurement result threshold comprises a second target signal received power variation threshold and/or a second target signal received quality threshold.

56. An ambient power (AMP) device, comprising:
a processing unit, configured to perform a target operation according to a target parameter, wherein the target operation comprises an operation related to cell selection and/or cell reselection, and the target parameter is related to a capability of the target AMP device.

57. An ambient power (AMP) device, comprising:
a processing unit, configured to:

adjust, according to a difference in capabilities between the AMP device and a reference device, a measurement result of a cell measured by the AMP device to obtain a target measurement result, wherein the reference device is a non-AMP device or a reference AMP device; and
perform a target operation according to the target measurement result and a reference parameter, wherein the target operation comprises an operation related to cell selection and/or cell reselection, and the reference parameter comprises a parameter for the reference device to perform the target operation.

58. A network device, comprising:
a communication unit, configured to transmit first information to a target ambient power (AMP) device; wherein the first information is used for the target AMP device to determine a target parameter, and the target parameter is related to a capability of the target AMP device; the target operation is used for the target AMP device to perform a target operation, and the target operation comprises an operation related to cell selection and/or cell reselection.

59. An ambient power (AMP) device, comprising: a processor and a memory, wherein the memory is configured to store a computer program, and the processor is configured to invoke and execute the computer program stored in the memory to perform the method according to any one of claims 1 to 25 or the method according to any one of claims 26 to 39.

60. A network device, comprising: a processor and a memory, wherein the memory is configured to store a computer program, and the processor is configured to invoke and execute the computer program stored in the memory to perform the method according to any one of claims 40 to 55.

61. A chip, comprising: a processor, configured to invoke and execute a computer program from a memory, to enable a device equipped with the chip to perform the method according to any one of claims 1 to 25, or the method according to any one of claims 26 to 39, or the method according to any one of claims 40 to 55.

62. A computer-readable storage medium, configured to store a computer program, wherein the computer program causes a computer to perform the method according to any one of claims 1 to 25, or the method according to any one of claims 26 to 39, or the method according to any one of claims 40 to 55.

63. A computer program product, comprising computer program instructions, wherein the computer program instructions cause a computer to perform the method according to any one of claims 1 to 25, or the method according to any one of claims 26 to 39, or the method according to any one of claims 40 to 55.

64. A computer program, wherein the computer program causes a computer to perform the method according to any one of claims 1 to 25, or the method according to any one of claims 26 to 39, or the method according to any one of claims 40 to 55.

FIG. 1

FIG. 2

RF

$C$

$+q$

$-q$

$R_L$

FIG. 3

Network device

TX

AMP

RX

LNA

Carrier signal

Backscattered signal

Zero energy terminal

Logic processing module

Energy harvesting module

FIG. 4

$$R_2 \qquad R_3$$

Binary coding

$$L_2 \qquad L_1 \qquad C_1 \qquad R_L \qquad S$$

$$C_2$$

FIG. 5

200

| A target ambient power (AMP) device performs a target operation according to a target parameter, where the target operation includes an operation related to cell selection and/or cell reselection, and the target parameter is related to the capability of the target AMP device. | S210 |

FIG. 6

300

| A target ambient power (AMP) device adjusts, according to the difference in capabilities between the AMP device and a reference device, a measurement result of a cell measured by the target AMP device to obtain a target measurement result, where the reference device is a non-AMP device or a reference AMP device | S310 |

| A target operation is performed according to the target measurement result and a reference parameter, where the target operation includes an operation related to cell selection and/or cell reselection, and the reference parameter includes a parameter for the reference device to perform the target operation. | S320 |

FIG. 7

AMP device 400

Processing unit 410

FIG. 8

AMP device 500

Processing unit 510

FIG. 9

Network device 800

Communication unit 810

FIG. 10

Communication device 600

Memory 620

Processor 610

Transceiver 630

FIG. 11

FIG. 12

FIG. 13

## INTERNATIONAL SEARCH REPORT

| | International application No. |
|---|---|
| | **PCT/CN2023/103252** |

| A. | CLASSIFICATION OF SUBJECT MATTER |
|---|---|

H04W36/00(2009.01)i

According to International Patent Classification (IPC) or to both national classification and IPC

| B. | FIELDS SEARCHED |
|---|---|

Minimum documentation searched (classification system followed by classification symbols)

  IPC: H04W

Documentation searched other than minimum documentation to the extent that such documents are included in the fields searched

Electronic data base consulted during the international search (name of data base and, where practicable, search terms used)

  CNABS; CNTXT; VEN; USTXT; WOTXT; EPTXT; CNKI; 3GPP: 小区, 切换, 选择, 能力, 能量, 采集, 反向散射, 接收功率, 质量, 环境能, 零功耗, 电子标签, 参考, 偏移, AMP, cell, HO, handover, switch, IoT, ambient, AMP, tag, backscatter, zero, energy, RF, RFID, power, harvest, reference, offset, signal

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113396612 A (IDAC HOLDINGS, INC.) 14 September 2021 (2021-09-14) description, paragraphs [0035]-[0170] | 1-5, 12-14, 17-25, 40, 41, 45, 48-56, 58-64 |
| X | WO 2022213351 A1 (BEIJING XIAOMI MOBILE SOFTWARE CO., LTD.) 13 October 2022 (2022-10-13) description, page 7, paragraph 3-page 19, paragraph 3 | 1, 40, 56, 58-64 |
| A | CN 115152160 A (IDAC HOLDINGS, INC.) 04 October 2022 (2022-10-04) entire document | 1-64 |
| A | CN 114828185 A (CHENGDU HUAWEI TECHNOLOGIES CO., LTD.) 29 July 2022 (2022-07-29) entire document | 1-64 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 February 2024** | **21 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/103252**

| Patent document cited in search report | | | Publication date (day/month/year) | Patent family member(s) | | | Publication date (day/month/year) |
|---|---|---|---|---|---|---|---|
| CN | 113396612 | A | 14 September 2021 | KR | 20210114935 | A | 24 September 2021 |
| | | | | WO | 2020131813 | A1 | 25 June 2020 |
| | | | | US | 2022070766 | A1 | 03 March 2022 |
| | | | | EP | 3900442 | A1 | 27 October 2021 |
| WO | 2022213351 | A1 | 13 October 2022 | EP | 4322364 | A1 | 14 February 2024 |
| CN | 115152160 | A | 04 October 2022 | WO | 2021154610 | A1 | 05 August 2021 |
| | | | | EP | 4097864 | A1 | 07 December 2022 |
| | | | | BR | 112022015090 | A2 | 16 November 2022 |
| | | | | US | 2023057994 | A1 | 23 February 2023 |
| | | | | JP | 2023512675 | A | 28 March 2023 |
| CN | 114828185 | A | 29 July 2022 | None | | | |

Form PCT/ISA/210 (patent family annex) (July 2022)